# EUROPÄISCHE PATENTANMELDUNG

(11) **EP 4 372 650 A1**
(43) Veröffentlichungstag der Anmeldung: **22.05.2024**
(21) Anmeldenummer: 23209848.3
(22) Anmeldetag: 14.11.2023
(51) Int. Cl.: G06Q 10/087, H04W 4/02

(54) **VERFAHREN ZUM INVENTARISIEREN EINES BEWEGLICHEN GEGENSTANDS**

(30) Priorität: 15.11.2022 DE 102022130127
(71) Anmelder: Wurm GmbH & Co. KG Elektronische Systeme, 42857 Remscheid (DE)
(72) Erfinder: Dreisbach, Heiko, 42781 Haan (DE); Kordon, Matthias, 42897 Remscheid (DE)
(74) Vertreter: Manitz Finsterwald Patent- und Rechtsanwaltspartnerschaft mbB

(57) **Zusammenfassung**

Bei einem Verfahren zum Inventarisieren eines beweglichen Gegenstands, insbesondere eines beweglichen Investitionsguts und/oder Kühlmöbels, welcher eine Identifikationseinrichtung aufweist, die einen dem Gegenstand zugeordneten Identifizierungscode für ein berührungsloses maschinelles Auslesen durch ein externes Lesegerät bereithält wird der Identifizierungscode durch das Lesegerät, insbesondere ein Smartphone, berührungslos maschinell ausgelesen. Zudem wird dem ausgelesenen Identifizierungscode eine Standortinformation zugeordnet wird, welche einen Standort des Gegenstands bezeichnet, und der ausgelesene Identifizierungscode und die zugeordnete Standortinformation werden an eine Inventarisierungsdatenbank übermittelt.

## Beschreibung

Die Erfindung betrifft ein Verfahren zum Inventarisieren eines beweglichen Gegenstands, insbesondere eines beweglichen Investitionsguts und/oder eines Kühlmöbels.

Grundsätzlich kann es gewünscht sein, Gegenstände, die zwischen verschiedenen Standorten bewegt werden, zu inventarisieren und einen aktuellen Standort des Gegenstands zu dokumentieren, so dass der Standort des Gegenstands jederzeit abgefragt werden kann. Insbesondere ist es bei Investitionsgütern ferner aufgrund von gesetzlichen Vorgaben erforderlich, dass die Investitionsgüter inventarisiert werden und deren Verbleib nachgehalten wird, so dass nachvollzogen werden kann, an welchem Ort sich ein jeweiliges Investitionsgut befindet. Jedoch können bewegliche Investitionsgüter oder sonstige zu inventarisierende bewegliche Gegenstände gegebenenfalls mehrmals zwischen verschiedenen Orten bewegt werden, so dass die Inventarisierung stets aktualisiert und der aktuelle Standort des Investitionsguts festgehalten werden muss. Insofern kann die Inventarisierung beweglicher Gegenstände und insbesondere beweglicher Investitionsgüter mit einem erheblichen Dokumentations- und Verwaltungsaufwand einhergehen.

Beispielsweise kann es bei sogenannten steckerfertigen Kühlmöbeln, die insbesondere zum Kühlen von Waren in Supermärkten dienen können, vorgesehen sein, dass mehrere Kühlmöbel gekauft und je nach Bedarf in verschiedenen Filialen aufgestellt werden. Daher kann ein jeweiliges Kühlmöbel in Abhängigkeit von einem momentanen Bedarf beispielsweise zwischen verschiedenen Filialen verschoben und/oder zwischenzeitlich in einem Lager für einen späteren Einsatz bereitgehalten werden, um bei Bedarf von dem Lager zu einer jeweiligen Filiale transportiert werden zu können. Da solche Kühlmöbel jedoch in der Regel Investitionsgüter darstellen, muss bei jeder Veränderung des Standorts des Kühlmöbels eine entsprechende Dokumentation angelegt werden.

Es ist daher eine Aufgabe der Erfindung, ein Verfahren zum Inventarisieren beweglicher Gegenstände bereitzustellen, durch welches der Verwaltungsaufwand für das Nachhalten eines aktuellen Standorts des beweglichen Gegenstands minimiert werden kann.

Diese Aufgabe wird gelöst durch ein Verfahren mit den Merkmalen des Anspruchs 1.

Das Verfahren betrifft das Inventarisieren eines beweglichen Gegenstands, welcher eine Identifikationseinrichtung aufweist, die einen dem Gegenstand zugeordneten Identifizierungscode für ein berührungsloses maschinelles Auslesen durch ein externes Lesegerät bereithält. Bei dem Verfahren wird der Identifizierungscode durch das Lesegerät, insbesondere ein Smartphone, berührungslos maschinell ausgelesen und dem ausgelesenen Identifizierungscode wird eine Standortinformation zugeordnet, welche einen Standort des Gegenstands bezeichnet. Zudem werden der ausgelesene Identifizierungscode und die zugeordnete Standortinformation an eine Inventarisierungsdatenbank übermittelt, wobei dieses Übermitteln insbesondere drahtlos erfolgen kann.

Indem an dem beweglichen Gegenstand eine Identifikationseinrichtung vorgesehen ist, welche einen berührungslos maschinell auslesbaren Identifizierungscode bereithält, kann der Identifizierungscode auf einfache Weise durch das externe Lesegerät ausgelesen und der Gegenstand identifiziert werden, ohne dass etwa eine Kennzeichnung des Gegenstands händisch eingegeben werden muss. Ferner kann die Identifikationseinrichtung insbesondere auslesbar sein, ohne dass der Gegenstand an eine Stromversorgung angeschlossen werden muss, so dass das Auslesen des Identifizierungscodes erfolgen kann, ohne den Gegenstand zuvor an eine Stromversorgung anzuschließen.

Beispielsweise kann es vorgesehen sein, die Identifikationseinrichtung bei einem Eintreffen des Gegenstands in einem Lager oder einer Filiale auszulesen, um den zu dem Lager transportierten und dort zunächst aufzubewahrenden Gegenstand zu identifizieren. Ferner kann vorgesehen sein, die Identifikationseinrichtung bei einem Verlassen eines jeweiligen Standorts, beispielsweise eines Lagers oder einer Filiale, auszulesen, um das Verlassen des Standorts feststellen und dokumentieren zu können.

Durch das Zuordnen einer Standortinformation zu dem ausgelesenen Identifizierungscode kann daraufhin ein Datenpaar aus dem Identifizierungscode und der Standortinformation erzeugt werden, welches eine Identifikation des Gegenstands und eine Abfrage dessen aktuellen Standorts ermöglicht. Beispielsweise kann der Gegenstand bei einem Eintreffen an einem bestimmten Standort, etwa einem Lager zur zwischenzeitlichen Lagerung des Gegenstands oder einer Filiale, an welcher der Gegenstand eingesetzt werden soll, identifiziert werden, um dem Gegenstand daraufhin eine den Standort kennzeichnende Standortinformation zuzuordnen.

Die Standortinformation kann insbesondere an dem Lesegerät eingegeben oder ausgewählt werden, indem etwa eine Bezeichnung des jeweiligen Standorts an dem Lesegerät eingegeben oder aus einer Liste möglicher Standorte ausgewählt werden kann. Alternativ dazu kann der Standort beispielsweise auch automatisch von dem Lesegerät zugeordnet werden, wobei das Lesegerät beispielsweise auf eine Standortbestimmungseinrichtung, insbesondere einen GPS-Sensor, zurückgreifen kann. Zudem ist es möglich, dass das Lesegerät den ausgelesenen Identifizierungscode an eine dem Standort zugeordnete zentrale Kontrolleinrichtung übermittelt, welche dazu ausgebildet ist, dem empfangenen Identifizierungscode eine der Kontrolleinrichtung zugeordnete Standortinformation zuzuordnen. Beispielsweise kann es sich bei der Kontrolleinrichtung um einen zentralen, insbesondere stationären, Rechner oder PC (Personal Computer) an einem Lager oder einer Filiale handeln, an welchem eine Standortinformation hinterlegt ist, die den Standort der Kontrolleinrichtung kennzeichnet. Zudem kann eine zentrale Kontrolleinrichtung ein Gateway für eine Fernwartung bilden.

Das derart erzeugte Datenpaar aus dem Identifizierungscode und der Standortinformation kann daraufhin an die Inventarisierungsdatenbank übermittelt werden, so dass durch eine Abfrage des Identifizierungscodes an der Inventarisierungsdatenbank zu jedem Zeitpunkt ermittelt werden kann, an welchem Standort sich der Gegenstand befindet. Beispielsweise kann es sich bei der Inventarisierungsdatenbank um eine zentrale, von einem Hersteller des Gegenstands und insbesondere eines Kühlmöbels betriebene Datenbank handeln, so dass letztlich bei dem Hersteller angefragt werden kann, an welchem Standort sich ein jeweiliger Gegenstand befindet. Zudem kann auch der Hersteller, an welchen der Standort eines Gegenstands beispielsweise für Wartungs- und/oder Reparaturarbeiten übermittelt werden muss, den Standort durch einen Zugriff auf die Inventarisierungsdatenbank ermitteln. Jedoch kann die Inventarisierungsdatenbank insbesondere auch von dem Eigentümer auslesbar sein, so dass dieser zu jeder Zeit Auskunft über den Standort des Gegenstands erlangen und erforderlichenfalls geben kann. Zudem kann es sich bei der Inventarisierungsdatenbank um eine ausschließlich von dem Eigentümer des Gegenstands auslesbare Datenbank handeln. Das Auslesen der Datenbank kann ferner grundsätzlich eine Legitimations- und/oder Identitätsprüfung verlangen, beispielsweise eine Passworteingabe.

Bei dem Lesegerät kann es sich insbesondere um ein mobiles oder ein stationäres Lesegerät handeln. Beispielsweise kann ein mobiles Lesegerät als ein Smartphone ausgebildet sein, auf welchem eine App oder ein Programm installiert ist, um die Identifikationseinrichtung auslesen und/oder die Standortinformation hinzufügen zu können. Während die Ausbildung des Lesegeräts als Smartphone somit nicht erfordert, dass ein eigens zum Auslesen der Identifikationseinrichtung vorgesehenes Lesegerät bereitgestellt wird, sondern lediglich eine entsprechende App installiert werden muss, kann auch vorgesehen sein, dass ein speziell für das Auslesen der Identifikationseinrichtung ausgebildetes mobiles Lesegerät genutzt wird.

Ein stationäres Lesegerät kann beispielsweise über ein Kabel mit einem stationären Rechner verbunden sein, um den ausgelesenen Identifizierungscode an den Rechner übermitteln zu können. Die Standortinformation kann daraufhin beispielsweise an dem Rechner ausgewählt oder eingegeben werden, wobei die Standortinformation alternativ auch unmittelbar in dem Rechner hinterlegt sein kann. Der Rechner kann zudem dazu ausgebildet sein, das Datenpaar aus dem Identifizierungscode und der Standortinformation an die Inventarisierungsdatenbank zu übermitteln.

Darüber hinaus kann ein stationäres Lesegerät beispielsweise an einem Eingang eines Standorts, beispielsweise eines Lagers oder einer Filiale, angeordnet sein, so dass der Identifizierungscode unmittelbar bei einem Eintreffen des Gegenstands und Führen des Gegenstands durch den Eingang automatisch ausgelesen werden kann. Ein solches Lesegerät, welches beispielsweise an einem Rahmen einer Tür angeordnet sein kann, kann ferner dazu ausgebildet sein, den ausgelesenen Identifizierungscode an einen an dem Standort angeordneten Rechner zu übermitteln, welcher dem empfangenen Identifizierungscode die Standortinformation hinzufügen und das erzeugte Datenpaar an die Inventarisierungsdatenbank übermitteln kann. Jedoch kann die Standortinformation auch unmittelbar in einem Speicher des stationären Lesegeräts hinterlegt sein, so dass das Lesegerät dem ausgelesenen Identifizierungscode die Standortinformation zuordnen und das Datenpaar aus dem Identifizierungscode und der Standortinformation an die Inventarisierungsdatenbank übermitteln kann.

Das Datenpaar aus dem Identifizierungscode und der Standortinformation kann insbesondere drahtlos und/oder über eine Funkverbindung an die Inventarisierungsdatenbank übermittelt werden. Beispielsweise kann dazu eine WLAN/WiFi-Verbindung oder eine Mobilfunkverbindung vorgesehen sein. Auch das Übermitteln des ausgelesenen Identifizierungscodes von einem mobilen Lesegerät an eine Kontrolleinrichtung und/oder einen stationären Rechner kann insbesondere über eine derartige Funkverbindung erfolgen, wobei jedoch auch eine kabelgebundene Übertragung möglich ist.

Weitere Ausführungsformen sind den abhängigen Ansprüchen, der Beschreibung und den Zeichnungen zu entnehmen.

Bei einigen Ausführungsformen kann der Identifizierungsode eine von dem Eigentümer des Gegenstands vergebene Kennzeichnung des Gegenstands, insbesondere eine Zahlen- und/oder Buchstabenfolge, umfassen. Ferner kann der Identifizierungscode bei einigen Ausführungsformen eine von dem Hersteller des Gegenstands vergebene Kennzeichnung umfassen. Darüber hinaus kann der Identifizierungscode bei einigen Ausführungsformen auch eine Eigentümer- und/oder eine Herstellerinformation umfassen. Die Standortinformation kann insbesondere eine Bezeichnung des Standorts, beispielsweise eines Lagers oder einer Filiale, und/oder Koordinaten des Standorts, insbesondere GPS-Koordinaten, umfassen.

Bei einigen Ausführungsformen kann die Standortinformation dem Identifizierungscode an dem Lesegerät zugeordnet werden. Beispielsweise kann bei einem als Smartphone ausgebildeten Lesegerät vorgesehen sein, dass die Standortinformation in einer App bzw. einem Programm, in welcher oder in welchem auch der Identifizierungscode ausgelesen wird, ausgewählt oder eingegeben wird, so dass zum Erzeugen des Datenpaars aus dem Identifizierungscode und der Standortinformation ausschließlich das Lesegerät genutzt werden muss. Zudem kann ein automatisches Zuordnen der Standortinformation vorgesehen sein, wenn das Lesegerät etwa über eine Standortbestimmungseinrichtung, beispielsweise einen GPS-Sensor, verfügt oder eine Information über einen dem Lesegerät zugeordneten Standort, beispielsweise eine Information über eine Filiale oder ein Lager, in welchem das Lesegerät verwendet wird, in einem Speicher des Lesegeräts gespeichert ist.

Alternativ dazu kann beispielsweise auch vorgesehen sein, dass der von dem Lesegerät ausgelesene Identifizierungscode an einen mit dem Lesegerät, beispielsweise über ein Kabel oder eine Funkverbindung, verbundenen Rechner oder eine Kontrolleinrichtung übermittelt wird, an welchem oder an welcher dem Identifizierungscode die Standortinformation hinzufügt wird, um das Datenpaar aus dem Identifizierungscode und der Standortinformation an die Inventarisierungsdatenbank zu übermitteln. Auch an einem solchen Rechner kann die Standortinformation beispielsweise automatisch, insbesondere durch Auslesen eines Speichers, oder durch eine Benutzereingabe oder -auswahl hinzugefügt werden.

Die Standortinformation kann bei einigen Ausführungsformen automatisch von dem Lesegerät ermittelt werden. Alternativ dazu kann die Standortinformation durch eine Benutzereingabe ausgewählt oder erzeugt werden. Beispielsweise kann eine Standortinformation automatisch durch Auslesen eines GPS-Sensors oder eines Speichers des Lesegeräts ermittelt werden, wobei jedoch beispielsweise jeweiligen GPS-Koordinaten eine Bezeichnung des Standorts, etwa einer Filiale und/oder eines Lagers, zugeordnet werden kann und eine Bezeichnung der Filiale und/oder des Lagers als Standortinformation an die Inventarisierungsdatenbank übermittelt werden kann. Zudem kann beispielsweise auch an der Inventarisierungsdatenbank eine Zuordnung von empfangenen GPS-Koordinaten zu einer Standortbezeichnung erfolgen. Im Falle einer Benutzereingabe kann die Standortinformation beispielsweise aus einem Dropdown-Menü oder einer Liste auswählbar sein oder die Standortinformation kann durch die Benutzereingabe unmittelbar, beispielsweise über eine Tastatur oder an einem Touchscreen eines Smartphones, eingegeben werden.

Der Identifizierungscode und die Standortinformation können bei einigen Ausführungsformen von dem Lesegerät an die Inventarisierungsdatenbank übermittelt werden. Beispielsweise kann das Übermitteln durch Auswählen eines entsprechenden Befehls in einer App bzw. einem Programm auf einem Smartphone erfolgen, mittels dessen auch die Identifikationseinrichtung auslesbar sein kann.

Der Identifizierungscode kann bei einigen Ausführungsformen einen drahtlos auslesbaren elektronischen Code umfassen, wobei der elektronische Code von dem Lesegerät über eine Funkverbindung ausgelesen werden kann. Ein solcher elektronischer Code kann beispielsweise in einem Speicher hinterlegt sein, welcher von dem Lesegerät ausgelesen werden kann. Um ein solches Auslesen über eine Funkverbindung zu ermöglichen, kann der Gegenstand insbesondere eine Sende- und Empfangseinrichtung aufweisen, mittels derer der Identifizierungscode in Ansprechen auf eine über die Funkverbindung empfangene Anfrage an das Lesegerät übermittelt werden kann.

Beispielsweise kann es vorgesehen sein, dass der Identifizierungscode von dem Lesegerät über eine Bluetooth-Verbindung, eine RFID (Radio Frequency Identification)-Verbindung, insbesondere eine NFC (Near Field Communication)-Verbindung, eine Mobilfunkverbindung und/oder eine WLAN/WiFi-Verbindung ausgelesen wird.

Bei einigen Ausführungsformen kann der elektronische Code von dem Lesegerät über eine RFID (Radio Frequency Identification)-Verbindung, insbesondere eine NFC (Near Field Communication)-Verbindung, ausgelesen werden. Insbesondere kann somit vorgesehen sein, dass der elektronische Code über eine verhältnismäßig kurzreichweitige Funkverbindung auslesbar ist, so dass der Code lediglich dann ausgelesen werden kann, wenn sich das Lesegerät in direkter Nähe zu dem beweglichen Gegenstand befindet. Das Übermitteln des Identifizierungscodes über verhältnismäßig kurze Reichweiten erfordert insbesondere lediglich geringe Energien, sodass das Übermitteln des Identifizierungscodes an das Lesegerät erfolgen kann, ohne dass eine starke Energiequelle an dem Gegenstand bereitgestellt oder der Gegenstand mit einer Stromversorgung verbunden werden muss. Vielmehr kann eine verhältnismäßig kleine Energiequelle, beispielsweise eine Batterie oder ein Akkumulator, ausreichend sein, wobei insbesondere eine Übermittlung des Identifizierungscodes über eine NFC-Verbindung auch ohne das Bereitstellen einer Energiequelle an dem Gegenstand erfolgen kann, wie nachstehend noch erläutert ist.

Die Identifikationseinrichtung kann bei einigen Ausführungsformen einen aktiven Transponder, insbesondere einen aktiven RFID-Tag, oder einen passiven Transponder, insbesondere einen NFC-Tag, mit einem Speicher aufweisen, in welchem der Identifizierungscode gespeichert ist, wobei der Identifizierungscode von dem Transponder an das Lesegerät übermittelt werden kann.

Insbesondere kann der Transponder dazu ausgebildet sein, den Identifizierungscode drahtlos und/oder über eine Funkverbindung an das Lesegerät zu übermitteln. Der Transponder kann dazu insbesondere eine Sende- und Empfangseinrichtung aufweisen, um eine Anfrage des Identifizierungscodes empfangen und den aus dem Speicher ausgelesenen Identifizierungscode an das Lesegerät übermitteln zu können.

Ein aktiver Transponder kann eine eigene Energiequelle aufweisen und/oder mit einer eigenen Energiequelle verbunden sein, von welcher der Transponder die Energie beziehen kann, um den in dem Speicher gespeicherten Identifizierungscode auslesen und an das Lesegerät übermitteln zu können. Um jedoch bei einem solchen aktiven Transponder einen unnötigen Energieverbrauch zu vermeiden, kann vorgesehen sein, dass die Energieversorgung lediglich dann aktiviert wird, wenn an dem Transponder ein Signal des Lesegeräts, insbesondere eine Anfrage des Identifizierungscodes, empfangen wird, so dass die von der Energiequelle bereitgestellte Energie nicht dauerhaft, sondern lediglich zu Zeitpunkten genutzt wird, zu welchen ein Auslesen des Identifizierungscodes erfolgen soll. Beispielsweise kann daher vorgesehen sein, von dem Lesegerät an den aktiven Transponder übermittelte elektromagnetische Strahlung dazu zu nutzen, die Energieversorgung des Transponders zu aktiveren, so dass durch den aktiven Transponder ein Auslesen des Identifizierungscodes, insbesondere eines elektronischen Codes, auf energiesparende Art und Weise ermöglicht werden kann.

Ein passiver Transponder kann hingegen keine eigene Energiequelle aufweisen, sondern dazu ausgebildet sein, die Energie zur Übermittlung des Identifizierungscodes aus von dem Lesegerät bereitgestellter elektromagnetischer Strahlung zu beziehen. Beispielsweise kann der passive Transponder zu ausgebildet sein, an einer Antenne empfangene elektromagnetische Strahlung dazu zu nutzen, einen Mikrochip zu aktivieren und den Speicher auszulesen, um den in dem Speicher hinterlegten Identifizierungscode - ebenfalls unter Nutzung der von dem Lesegerät durch elektromagnetische Strahlung bzw. über die Funkverbindung bereitgestellten elektrischen Energie - an das Lesegerät zu übermitteln.

Während ein passiver Transponder somit ohne jede Energiequelle und daher einfach und kostengünstig ausgebildet sein kann, ermöglicht ein aktiver Transponder insbesondere eine Übermittlung des Identifizierungscodes über im Vergleich zu einem passiven Transponder größere Reichweiten bei dennoch geringem Energiebedarf. Beispielsweise kann das Auslesen des Identifizierungscodes bei einer Ausbildung des Gegenstands mit einem passiven Transponder über eine NFC-Verbindung erfolgen, während bei einem aktiven Transponder beispielsweise eine Übermittlung über eine sonstige RFID-Verbindung, insbesondere eine im Vergleich zu einer NFC-Verbindung längerreichweitige RFID-Verbindung, vorgesehen sein kann. Unabhängig von der Ausbildung der Identifikationseinrichtung mit einem aktiven oder einem passiven Transponder ist es jedoch nicht erforderlich, den Gegenstand mit einer Stromversorgung zu verbinden, um ein Auslesen des Identifizierungscodes zu ermöglichen, so dass die Identifikationseinrichtung unmittelbar bei einem Eintreffen des Gegenstands an einem Standort ausgelesen werden kann.

Der Transponder kann bei einigen Ausführungsformen durch von dem Lesegerät übermittelte elektromagnetische Strahlung aktiviert werden. Wie bereits erläutert, kann ein aktiver Transponder beispielsweise durch von dem Lesegerät übermittelte elektromagnetische Strahlung dahingehend aktiviert werden, dass der Transponder mit einer an dem Gegenstand vorgesehenen Energiequelle verbunden oder eine Übertragung elektrischer Energie an den aktiven Transponder aktiviert wird, um den Identifizierungscode übermitteln zu können, insbesondere über eine RFID-Verbindung. Ein passiver Transponder kann ferner insbesondere unmittelbar dahingehend durch von dem Lesegerät übermittelte elektromagnetische Strahlung aktiviert werden, dass die durch die elektromagnetische Strahlung übermittelte elektrische Energie dazu genutzt wird, den Identifizierungscode an das Lesegerät zu übermitteln.

Bei einigen Ausführungsform kann der Speicher beschreibbar sein und der Identifizierungscode kann in den Speicher eingeschrieben werden. Insbesondere kann der Identifizierungscode in einem ersten Schritt des Verfahrens, beispielsweise bei einer Inbetriebnahme des Gegenstands oder bei einem Bezug des Gegenstands von einem Hersteller, in den Speicher des Transponders eingeschrieben werden. Dazu kann der Eigentümer des Gegenstands beispielsweise eine Kennzeichnung des Gegenstands, insbesondere als eine Ziffern- und/oder Buchstabenfolge, in den Speicher einschreiben. Es kann jedoch auch vorgesehen sein, dass der Identifizierungscode bereits herstellerseitig in den Speicher eingeschrieben wird, so dass der Hersteller des Gegenstands eine solche Kennzeichnung in dem Speicher hinterlegen kann. Beispielsweise kann der Speicher über das Lesegerät beschreibbar sein, wobei das Beschreiben des Speichers insbesondere über dieselbe Verbindung wie das Auslesen des Speichers, etwa eine NFC-Verbindung oder eine sonstige RFID-Verbindung, erfolgen kann.

Zusätzlich zu dem Identifizierungscode können bei einigen Ausführungsformen auch weitere Informationen über den Gegenstand in den Speicher geschrieben werden und/oder in dem Speicher hinterlegt sein, beispielsweise Informationen über einen Typ des Gegenstands, eine Seriennummer und/oder ein Baujahr. Zudem kann auch vorgesehen sein, dass der Speicher mehrmals beschrieben und/oder der Identifizierungscode geändert wird, so dass ein Eigentümer grundsätzlich wechselnde Identifizierungscodes in dem Speicher hinterlegen kann oder etwa ein neuer Eigentümer nach einem Kauf des Gegenstands einen geänderten Identifizierungscode in den Speicher einschreiben kann, welcher einer jeweiligen Systematik des Eigentümers zur Kennzeichnung von Gegenständen oder Investitionsgütern folgt.

Vor dem Beschreiben des Speichers kann bei einigen Ausführungsformen eine Legitimations- und/oder Identitätsprüfung durchgeführt werden. Beispielsweise kann es vorgesehen sein, dass in dem Speicher ein Passwort hinterlegt ist, wobei eine übermittelte Information lediglich dann in dem Speicher gespeichert wird, wenn zudem das entsprechende Passwort übermittelt wurde. Ferner kann die Legitimations- und/oder Identitätsprüfung bei einigen Ausführungsformen auch an dem Lesegerät erfolgen, mittels dessen die in den Speicher zu schreibende Information an den Transponder übermittelt werden kann. Beispielsweise kann die einzuschreibende Information in einer App bzw. einem Programm eingegeben und durch einen entsprechenden Befehl an den Transponder übermittelt werden, wobei zum Öffnen der App und/oder zum Auswählen des Übermittlungsbefehls eine Legitimationsprüfung und/oder Identitätsprüfung durchgeführt werden kann. Beispielsweise kann dazu eine Eingabe eines Passworts an dem Lesegerät gefordert werden oder es kann eine biometrische Prüfung erfolgen, beispielsweise eine Gesichtserkennung oder eine Überprüfung eines Fingerabdrucks.

Ferner kann der Identifizierungscode bei einigen Ausführungsformen einen ein- oder zweidimensionalen optisch auslesbaren optischen Code umfassen, wobei der optische Code durch das Lesegerät optisch ausgelesen wird. Beispielsweise kann an dem Gegenstand ein QR-Code oder ein Strichcode angebracht sein, welcher durch das Lesegerät optisch ausgelesen werden kann und welcher den Identifizierungscode umfasst. Auch ein solches optisches Auslesen kann ein schnelles, berührungsloses und maschinelles Auslesen durch das Lesegerät, insbesondere ein Smartphone, ermöglichen, um den ausgelesenen Identifizierungscode sowie eine zugeordnete Standortinformation an die Inventarisierungsdatenbank übermitteln zu können. Der optische Code kann beispielsweise von einem Eigentümer oder einem Hersteller des Gegenstands angebracht werden bzw. worden sein.

Bei einigen Ausführungsformen kann zum Auslesen des Identifizierungscodes und/oder zum Übermitteln an die Inventarisierungsdatenbank eine Legitimations- und/oder eine Identitätsprüfung durchgeführt werden. Auch dies kann beispielsweise durch Eingabe eines Passworts an dem Lesegerät erfolgen, welches das Passwort gemeinsam mit einer Anfrage des Identifizierungscodes an einen Transponder übermitteln kann, wobei das Passwort mit einem in einem Speicher des Transponders gespeicherten Passwort verglichen werden kann. Zudem kann das Öffnen eines Programms oder einer App zum Auslesen des Identifizierungscodes und/oder das Auswählen eines Befehls zum Auslesen des Identifizierungscodes an dem Lesegerät eine Legitimations- und/oder Identitätsprüfung erfordern, die unmittelbar an dem Lesegerät durchgeführt werden kann. Beispielsweise kann daher eine Passworteingabe an dem Lesegerät erforderlich sein und das eingegebene Passwort mit einem in einem Speicher des Lesegeräts hinterlegten Passwort verglichen werden und/oder es kann eine biometrische Überprüfung an dem Lesegerät durchgeführt werden, beispielsweise eine Gesichtserkennung oder eine Überprüfung eines Fingerabdrucks.

Bei einigen Ausführungsformen kann der Identifizierungscode an der Inventarisierungsdatenbank einer weiteren Kennzeichnung des Gegenstands zugeordnet werden.

Beispielsweise kann es vorgesehen sein, dass die Inventarisierungsdatenbank von dem Hersteller des Gegenstands, insbesondere eines Kühlmöbels, betrieben wird. Der Identifizierungscode kann jedoch insbesondere von einem Kunden des Herstellers und Eigentümers des Gegenstands, insbesondere des Kühlmöbels, vergeben werden, so dass der Identifizierungscode beispielsweise einer kundenspezifischen Systematik zur Kennzeichnung von Gegenständen folgen kann. Um eine Zuordnung zwischen einem solchen von dem Kunden selbst vergebenen Identifizierungscode und beispielsweise einer herstellerseitigen Codierung oder einer Codierung eines sonstigen Betreibers der Inventarisierungsdatenbank zu ermöglichen, kann somit bei einigen Ausführungsformen ein Mapping zwischen dem Identifizierungscode und einer weiteren Kennzeichnung erfolgen, wobei die weitere Kennzeichnung insbesondere einer Systematik des Betreibers der Inventarisierungsdatenbank und/oder des Herstellers des Gegenstands folgen kann. Umgekehrt kann beispielsweise auch vorgesehen sein, dass der Identifizierungscode bereits herstellerseitig in der Identifikationseinrichtung hinterlegt wird, wobei ein Kunde und Eigentümer des Gegenstands beispielsweise dem jeweiligen Identifizierungscode eine kundenspezifische weitere Kennzeichnung zuordnen kann. Ein Mapping zwischen dem Inventarisierungscode und der weiteren Kennzeichnung ermöglicht in beiden Fällen, dass sowohl der Betreiber der Inventarisierungsdatenbank als auch der Eigentümer des Gegenstands die in der Datenbank hinterlegten Informationen durch Verwenden der jeweiligen eigenen Systematik und entsprechend durch Abfragen des Identifizierungscodes oder durch Abfragen der weiteren Kennzeichnung auslesen kann.

Der Gegenstand kann bei einigen Ausführungsformen eine Steuereinrichtung aufweisen, wobei der Identifizierungscode bei einem Anschließen der Steuereinrichtung an eine Stromversorgung von der Steuereinrichtung ausgelesen werden und im Falle einer Datenverbindung von der Steuereinrichtung zu der Inventarisierungsdatenbank von der Steuereinrichtung an die Inventarisierungsdatenbank übermittelt werden kann.

Beispielsweise kann ein Kühlmöbel eine Steuereinrichtung aufweisen, welche dazu ausgebildet ist, Einstellungen an dem Kühlmöbel vorzunehmen und/oder zu verändern. Eine solche Steuereinrichtung kann beispielsweise auch dazu ausgebildet sein, eine Regelung durchzuführen, um das Kühlmöbel auf eine vorgegebene oder vorgebbare Soll-Temperatur zu regeln.

Die Steuereinrichtung kann daher grundsätzlich auch als eine Steuer- und/oder Regeleinrichtung bezeichnet werden. Zudem kann die Steuereinrichtung beispielsweise eine an einer Außenseite des Gegenstands, insbesondere eines Kühlmöbels, angebrachte Bedieneinrichtung aufweisen oder mit einer solchen Bedieneinrichtung verbunden sein, an welcher ein Bediener vorzunehmende Einstellungen auswählen und/oder eingegeben kann. Dies kann es dem Bediener etwa ermöglichen, eine an einem Kühlmöbel zu erreichende Kühltemperatur an der Bedieneinrichtung einzugeben oder auszuwählen, wobei die Steuereinrichtung dazu ausgebildet sein kann, die Kühltemperatur auf den eingegebenen oder ausgewählten Wert zu regeln. Die Bedieneinrichtung kann dazu beispielsweise einen Touchscreen und/oder eine oder mehrere Tasten aufweisen.

Zudem kann die Steuereinrichtung bei einigen Ausführungsformen eine Anzeigeeinrichtung aufweisen oder mit einer Anzeigeeinrichtung verbunden sein, welche dazu ausgebildet ist, Informationen über einen momentanen Zustand des Gegenstands, beispielsweise eine Kühltemperatur, anzuzeigen. Eine solche Anzeigeeinrichtung kann ferner bei einige Ausführungsformen als kombinierte Anzeige- und Bedieneinrichtung ausgebildet sein und beispielsweise einen Touchscreen aufweisen, an welchem einem Bediener einerseits Informationen angezeigt und andererseits Benutzereingaben zum Einstellen des Gegenstands entgegengenommen werden können.

Insofern kann die Steuereinrichtung insbesondere modular aufgebaut sein und beispielsweise ein mit verschiedenen Einrichtungen, insbesondere einer Anzeige- und/oder Bedieneinrichtung, verbundenes Steuermodul, beispielsweise einen Mikroprozessor, aufweisen, welches dazu ausgebildet ist, Informationen von den verschiedenen Einrichtungen zu empfangen und/oder Informationen an die verschiedenen Einrichtungen zu senden. Beispielsweise kann das Steuermodul dazu ausgebildet sein, eine Information über einen momentanen Zustand des Gegenstands an eine Anzeigeeinrichtung zu übermitteln und/oder eine Information über eine Benutzereingabe von einer Bedieneinrichtung zu empfangen. Zudem kann das Steuermodul dazu ausgebildet sein, jeweilige Programme zur Steuerung und/oder Regelung des Gegenstands und/oder zur Umsetzung empfangener Benutzereingaben auszuführen.

Indem die Steuereinrichtung dazu ausgebildet sein kann, den Identifizierungscode bei einem Anschließen an eine Stromversorgung auszulesen, kann eine alternative Möglichkeit zum Auslesen des Identifizierungscodes geschaffen werden, so dass das Auslesen des Identifizierungscodes bei einem Anschließen des Gegenstand an die Stromversorgung und insbesondere in Fällen, in welchen ein Anschließen des Gegenstands an die Stromversorgung an einem Standort ohnehin vorgesehen ist, nicht durch das Lesegerät erfolgen muss.

Beispielsweise kann es bei einem Kühlmöbel vorgesehen sein, dass dieses nach dem Erreichen einer Filiale eines Supermarkts in Betrieb genommen wird, um Waren zu kühlen, wozu das Kühlmöbel und dessen Steuereinrichtung zwangsläufig mit der Stromversorgung verbunden werden müssen. In diesem Fall kann der Identifizierungscode unmittelbar von der Steuereinrichtung ausgelesen und - im Falle einer Datenverbindung zu der Inventarisierungsdatenbank - an die Inventarisierungsdatenbank übermittelt werden, so dass es nicht erforderlich ist, den Identifizierungscode durch das Lesegerät auszulesen. Vielmehr kann das Auslesen des Identifizierungscodes infolge des ohnehin notwendigen Anschließens des Kühlmöbels an die Stromversorgung erfolgen.

Um den Identifizierungscode an die Inventarisierungsdatenbank übermitteln zu können, kann die Steuereinrichtung beispielsweise ein Funkmodul aufweisen oder mit einem Funkmodul verbunden sein, so dass das der Identifizierungscode und der Standortinformation beispielsweise über eine WLAN/WiFi-Verbindung an die Inventarisierungsdatenbank übermittelbar sein kann. Ferner kann die Steuereinrichtung bei einigen Ausführungsformen auch kabelgebunden an das Internet anschließbar und mit der Inventarisierungsdatenbank verbindbar sein, um den Identifizierungscode über eine derartige Verbindung an die Inventarisierungsdatenbank übermitteln zu können. Zudem ist auch eine indirekte Übermittlung des Identifizierungscodes an die Inventarisierungsdatenbank möglich, indem der Identifizierungscode zunächst von der Steuereinrichtung an eine zentrale Kontrolleinrichtung übermittelt wird, so dass die Datenverbindung von der Steuereinrichtung zu der Inventarisierungsdatenbank über die zentrale Kontrolleinrichtung führen kann. Dies wird nachstehend noch näher erläutert.

Wird der bewegliche Gegenstand und insbesondere ein Kühlmöbel hingegen in ein Lager transportiert und dort lediglich zwischengelagert, ohne in Betrieb genommen zu werden, ist es umgekehrt nicht erforderlich, den Gegenstand oder dessen Steuereinrichtung zum Inventarisieren eigens an eine Stromversorgung anzuschließen. Vielmehr kann der Identifizierungscode in einem solchen Fall auf komfortable Weise durch das Lesegerät ausgelesen werden. Insofern kann das Inventarisieren situationsabhängig auf möglichst einfache Weise erfolgen, indem in einem Fall, in welchem die Steuereinrichtung ohnehin an die Stromversorgung angeschlossen wird, kein eigenes Auslesen des Identifizierungscodes durch das Lesegerät notwendig ist, und im umgekehrten Fall, in welchem die Steuereinrichtung nicht an die Stromversorgung angeschlossen werden soll, ein solches Anschließen an die Stromversorgung auch nicht erforderlich ist.

Die Standortinformation kann bei einigen Ausführungsformen von der Steuereinrichtung des Gegenstands gemeinsam mit dem Identifizierungscode an die Inventarisierungsdatenbank übermittelt werden. Beispielsweise kann der Gegenstand eine mit der Steuereinrichtung verbundene Standortbestimmungseinrichtung, beispielsweise einen GPS-Sensor, aufweisen, und die Steuereinrichtung kann dazu ausgebildet sein, eine von der Standortbestimmungseinrichtung übermittelte Standortinformation zu empfangen und gemeinsam mit dem Identifizierungscode an die Inventarisierungsdatenbank zu übermitteln.

Zudem kann beispielsweise vorgesehen sein, dass die Steuereinrichtung dazu ausgebildet ist, eine Standortinformation von einem externen Gerät, beispielsweise einem Smartphone, zu empfangen und daraufhin gemeinsam mit dem ausgelesenen Identifizierungscode an die Inventarisierungsdatenbank zu übermitteln. Insbesondere kann die Steuereinrichtung ein Funkmodul aufweisen oder mit einem Funkmodul verbunden sein, um die Standortinformation von dem externen Gerät über eine Funkverbindung, beispielsweise eine WLAN/WiFi-Verbindung, eine Mobilfunkverbindung, eine Bluetooth-Verbindung und/oder eine RFID-Verbindung, insbesondere eine NFC-Verbindung, empfangen zu können. Bei derartigen Ausführungsformen kann somit beispielsweise vorgesehen sein, dass der Steuereinrichtung nach dem Eintreffen an einem Standort und dem Anschließen an die Stromversorgung eine Standortinformation über ein externes Gerät mitgeteilt wird, so dass die Steuereinrichtung diese Standortinformation gemeinsam mit dem ausgelesenen Identifizierungscode an die Inventarisierungsdatenbank übermitteln kann.

Zudem kann bei einigen Ausführungsformen vorgesehen sein, dass die Standortinformation an einer mit der Steuereinrichtung verbundenen und/oder von der Steuereinrichtung umfassten Bedieneinrichtung, beispielsweis einem Touchscreen, eingegeben oder aus einem Menü möglicher Standorte ausgewählt und der Steuereinrichtung dadurch mitgeteilt wird.

Alternativ dazu kann der Identifizierungscode bei einigen Ausführungsformen von der Steuereinrichtung des Gegenstands an eine zentrale Kontrolleinrichtung an einem Standort des Gegenstands, insbesondere einem Lager oder einer Filiale, übermittelt werden, mit welcher die Steuereinrichtung nach einem Eintreffen des Gegenstands an dem Standort verknüpft wird, wobei die Standortinformation der zentralen Kontrolleinrichtung zugeordnet sein und die zentrale Kontrolleinrichtung den Identifizierungscode gemeinsam mit der Standortinformation an die Inventarisierungsdatenbank übermitteln kann.

Beispielsweise kann eine solche zentrale Kontrolleinrichtung eine Schnittstelle oder ein Gateway bilden, um eine Fernwartung von an einem Standort angeordneten Gegenständen, beispielsweise in einer jeweiligen Filiale angeordnete Kühlmöbel, zu ermöglichen. Die Kontrolleinrichtung kann daher dem jeweiligen Standort, beispielsweise der entsprechenden Filiale, zugeordnet sein, wobei der Gegenstand bzw. dessen Steuereinrichtung nach dem Eintreffen des Gegenstands an dem betreffenden Standort mit der Kontrolleinrichtung verbunden und gewissermaßen in das über die Kontrolleinrichtung zugängliche System aufgenommen werden kann, um eine Fernwartung des Gegenstands zu ermöglichen. Zudem kann die Kontrolleinrichtung beispielsweise dazu vorgesehen sein, Einstellungen mehrerer an einem Standort angeordneter Gegenstände als eine zentrale Steuerung verändern zu können.

Beispielsweise kann ein Datenaustausch zwischen der Steuereinrichtung und der Kontrolleinrichtung ermöglicht werden, indem die Steuereinrichtung an ein Buskabel angeschlossen und über das Buskabel mit der Kontrolleinrichtung verbunden wird. Bei solchen Ausführungsformen kann somit vorgesehen sein, dass bei dem Eintreffen des Gegenstands an dem Standort, insbesondere einer Filiale, einerseits der Gegenstand durch Anschließen an die Stromversorgung in Betrieb genommen und andererseits durch Anschließen an das Buskabel in das über die Kontrolleinrichtung zugängliche System aufgenommen wird. Alternativ dazu ist jedoch auch möglich, dass die Steuereinrichtung mit einem Funkmodul verbunden und dazu ausgebildet ist, infolge des Anschließens an die Stromversorgung eine Funkverbindung mit der Kontrolleinrichtung einzugehen, so dass die Datenübertragung über die Funkverbindung erfolgen kann. Zudem kann grundsätzlich auch eine Datenübertragung und eine Verbindung zu der Kontrolleinrichtung über ein Stromversorgungskabel oder eine Powerline vorgesehen sein, so dass die Steuereinrichtung bei einigen Ausführungsformen unmittelbar infolge des Anschlie-ßens an die Stromversorgung über eine Kabelverbindung mit der Kontrolleinrichtung verbindbar sein kann.

Bei solchen Ausführungsformen kann der Identifizierungscode somit zunächst an die Kontrolleinrichtung übermittelt werden, um mitzuteilen, dass der jeweilige Gegenstand in das von der Kontrolleinrichtung kontrollierte und/oder über die Kontrolleinrichtung erreichbare System aufgenommen wurde. Die Kontrolleinrichtung kann den Identifizierungscode daraufhin an die Inventarisierungsdatenbank übermitteln, so dass die Übermittlung des Identifizierungscodes von der Steuereinrichtung an die Inventarisierungsdatenbank letztlich indirekt - über die zentrale Kontrolleinrichtung -erfolgen und eine indirekte Datenverbindung von der Steuereinrichtung zu der Inventarisierungsdatenbank bestehen kann. Die Standortinformation kann von der Kontrolleinrichtung beispielsweise bereits durch eine Identifizierung der Kontrolleinrichtung übermittelt werden, indem in der Inventarisierungsdatenbank eine Information darüber hinterlegt sein kann, welchem Standort die Kontrolleinrichtung zugeordnet ist. Alternativ dazu kann die Standortinformation beispielsweise als eine Bezeichnung des Standorts in einem von der Kontrolleinrichtung auslesbaren Speicher hinterlegt sein.

Alternativ zu einer Übermittlung des Identifizierungscodes und der Standortinformation durch die Kontrolleinrichtung kann bei einigen Ausführungsformen jedoch auch vorgesehen sein, dass die hinterlegte Standortinformation von der Kontrolleinrichtung an die Steuereinrichtung übermittelt wird und die Steuereinrichtung das Datenpaar aus dem ausgelesenen Identifizierungscode und der empfangenen Standortinformation daraufhin an die Inventarisierungsdatenbank übermittelt. Erneut kann diese Übermittlung insbesondere über eine Funkverbindung oder über einen kabelgebundenen Anschluss der Steuereinrichtung an das Internet erfolgen. Bei solchen Ausführungsformen muss daher auch nicht zwangsläufig eine Übermittlung des Identifizierungscodes von der Steuereinrichtung an die Kontrolleinrichtung erfolgen.

Die Steuereinrichtung kann den Identifizierungscode bei einigen Ausführungsformen aus einem Speicher auslesen, welcher auch von dem Lesegerät auslesbar ist, wobei die Steuereinrichtung den Identifizierungscode bei anderen Ausführungsformen aus einem von dem Lesegerät nicht auslesbaren Speicher auslesen kann.

Beispielsweise kann bei Ausführungsformen, die einen Transponder mit einem Speicher aufweisen, welcher von dem Lesegerät auslesbar ist, vorgesehen sein, dass der Speicher auch von der Steuereinrichtung auslesbar ist, wenn die Steuereinrichtung mit einer Stromversorgung verbunden ist. Jedoch kann auch vorgesehen sein, dass die Steuereinrichtung mit einem eigenen Speicher, insbesondere über eine Kabelverbindung, verbunden ist, welcher jedoch nicht von außen durch das Lesegerät und insbesondere nicht über eine Funkverbindung auslesbar ist. Auch ein solcher weiterer Speicher kann jedoch insbesondere beschreibbar sein, so dass ein Eigentümer und/oder ein Hersteller des beweglichen Gegenstands den Identifizierungscode beispielsweise sowohl in einem von dem Lesegerät auslesbaren Speicher als auch in einem von der Speichereinrichtung auslesbaren Speicher hinterlegen und/oder ändern kann.

Bei einigen Ausführungsformen kann der von der Steuereinrichtung ausgelesene Identifizierungscode dem durch das Lesegerät auslesbaren Identifizierungscode entsprechen, wohingegen bei anderen Ausführungsformen der Identifizierungscode einen ersten Code und einen zweiten Code umfassen kann, wobei der erste Code von dem Lesegerät und der zweite Code von der Steuereinrichtung auslesbar ist, wobei der erste Code und der zweite Code einander in der Inventarisierungsdatenbank zugeordnet sein können.

Beispielsweise kann es vorgesehen sein, dass der von der Steuereinrichtung auslesbare zweite Code bereits herstellerseitig in dem entsprechenden Speicher hinterlegt wird und einer herstellerseitigen Kennzeichnung des Gegenstands entspricht, wohingegen der erste Code von dem Eigentümer des Gegenstands in dem von dem Lesegerät auslesbaren Speicher hinterlegt worden sein kann. Das Zuordnen von dem ersten Code zu dem zweiten Code in der Inventarisierungsdatenbank ermöglicht wiederum ein Mapping zwischen einem Kennzeichnungssystem des Herstellers einerseits und einem Kennzeichnungssystem des Eigentümers andererseits, so dass sowohl der Hersteller als auch der Eigentümer durch Anfragen in den entsprechenden Kennzeichnungssystemen die Informationen aus der Inventarisierungsdatenbank abfragen können. Der erste Code kann folglich insbesondere verschieden von dem zweiten Code sein.

Die Steuereinrichtung kann insbesondere einen Mikroprozessor und/oder eine CPU (Central Processing Unit) umfassen. Bei den genannten Speichern kann es sich insbesondere um nichtflüchtige Speicher und/oder Halbleiterspeicher handeln.

Ferner kann bei einigen Ausführungsformen eine Information über einen Zeitpunkt, zu welchem der Identifizierungscode und die zugeordnete Standortinformation an der Inventarisierungsdatenbank empfangen und/oder an die Inventarisierungsbank übermittelt werden, in der Inventarisierungsdatenbank gespeichert werden. Insbesondere kann durch ein solches Speichern eines Zeitpunkts in der Inventarisierungsdatenbank dokumentiert werden, zu welchem Zeitpunkt der Identifizierungscode ausgelesen wurde, um somit nachträglich feststellen zu können, zu welchem Zeitpunkt der Gegenstand einen Standort erreicht und/oder verlassen hat. Dies kann es somit ermöglichen, nicht lediglich einen aktuellen Standort des Gegenstands ermitteln zu können, sondern auch etwaige Bewegungen des Gegenstands zwischen verschiedenen Standorten nachvollziehen zu können.

Die Erfindung betrifft ferner einen beweglichen Gegenstand, insbesondere ein bewegliches Investitionsgut und/oder ein Kühlmöbel, wobei der Gegenstand eine Identifikationseinrichtung, die einen dem Gegenstand zugeordneten Identifizierungscode für ein berührungsloses maschinelles Auslesen durch ein externes Lesegerät bereithält, und eine Steuereinrichtung aufweist. Die Identifikationseinrichtung umfasst einen mit der Steuereinrichtung verbundenen Speicher, in welchem der Identifizierungscode gespeichert ist, und die Steuereinrichtung ist dazu eingerichtet, den Identifizierungscode aus dem Speicher auszulesen, wenn die Steuereinrichtung an eine Stromversorgung angeschlossen ist. Zudem ist die Steuereinrichtung mit einer Schnittstelle verbunden und dazu eingerichtet, den ausgelesenen Identifizierungscode über die Schnittstelle an eine bezüglich des Investitionsguts externe Inventarisierungsdatenbank zu übermitteln.

Wie bereits erläutert, kann dieses Auslesen des Identifizierungscodes durch die Steuereinrichtung bei einem Anschluss an eine Stromversorgung insbesondere ein einfaches und schnelles Erfassen des Identifizierungscodes und Übermitteln desselben an die Inventarisierungsdatenbank ermöglichen, ohne dass dazu sonstige Schritte als das ohnehin vorgesehene Anschlie-ßen des Gegenstands an die Stromversorgung erforderlich sind. Der Identifizierungscode kann daraufhin von der Steuereinrichtung über die Schnittstelle an eine externe Inventarisierungsdatenbank übermittelt werden, so dass beispielsweise eine Information darüber, dass der bewegliche Gegenstand an einem bestimmten Standort, beispielsweise einem Lager oder einer Filiale, eingetroffen ist, an die Inventarisierungsdatenbank übermittelt werden kann.

Das Übermitteln des Identifizierungscodes an die Inventarisierungsdatenbank kann ferner insbesondere direkt oder indirekt erfolgen, wobei die Steuereinrichtung zu einem indirekten Übermitteln des Identifizierungscodes beispielsweise dazu ausgebildet sein kann, den Identifizierungscode zunächst an eine zentrale Kontrolleinrichtung zu übermitteln, welche den empfangenen Identifizierungscode daraufhin an die Inventarisierungsdatenbank übermittelt. Jedoch kann auch vorgesehen sein, dass die Steuereinrichtung unmittelbar mit der Inventarisierungsdatenbank verbindbar und dazu ausgebildet ist, den Identifizierungscode unmittelbar an die Inventarisierungsdatenbank zu übermitteln. Das Übermitteln an die Inventarisierungsdatenbank kann beispielsweise über eine Funkverbindung erfolgen.

Die Steuereinrichtung kann, wie bereits erläutert, insbesondere auch zum Durchführen einer Regelung ausgebildet sein und daher auch als Steuer- und/oder Regeleinrichtung bezeichnet werden. Zudem kann die Steuereinrichtung bei einigen Ausführungsformen mit einer Bedieneinrichtung, einer Anzeigeeinrichtung und/oder einer kombinierten Anzeige- und/oder Bedieneinrichtung verbunden sein oder derartige Einrichtungen umfassen.

Der Gegenstand kann bei einigen Ausführungsformen eine Standortbestimmungseinrichtung aufweisen und die Steuereinrichtung kann dazu ausgebildet sein, eine von der Standortbestimmungseinrichtung empfangene Standortinformation über einen Standort des Gegenstands an die Inventarisierungsdatenbank zu übermitteln. Beispielsweise kann der Gegenstand dazu einen GPS-Sensor aufweisen und auch die Standortinformation kann insbesondere über die Schnittstelle übermittelt werden, wobei wiederum ein direktes oder ein indirektes Übermitteln möglich ist. Wie bereits erläutert, kann somit ein Datenpaar aus einem Identifizierungscode und einer Standortinformation an die Inventarisierungsdatenbank übermittelt werden, so dass ein aktueller Standort des Gegenstands stets nachvollzogen werden kann.

Alternativ dazu kann die Steuereinrichtung bei einigen Ausführungsformen auch dazu ausgebildet sein, eine Standortinformation über einen Standort des Gegenstands von einem externen Gerät, beispielsweise einem Smartphone, und/oder durch eine Benutzereingabe an einer Bedieneinrichtung des Gegenstands zu empfangen und daraufhin an die Inventarisierungsdatenbank zu übermitteln.

Bei einigen Ausführungsformen kann die Schnittstelle mit einer zentralen Kontrolleinrichtung verbindbar sein und die Steuereinrichtung kann dazu eingerichtet sein, den Identifizierungscode nach dem Verbinden mit der zentralen Kontrolleinrichtung und/oder im Falle einer Verbindung zu der zentralen Kontrolleinrichtung an die zentrale Kontrolleinrichtung zu übermitteln. Die Kontrolleinrichtung kann bei solchen Ausführungsformen dazu ausgebildet sein, den Identifizierungscode gemeinsam mit einer der Kontrolleinrichtung zugeordneten Standortinformation an die Inventarisierungsdatenbank zu übermitteln.

Beispielsweise kann die Schnittstelle einen Anschluss für ein Buskabel bilden, über welches die Steuereinrichtung mit der Kontrolleinrichtung verbindbar sein kann. Alternativ oder zusätzlich dazu kann beispielsweise auch vorgesehen sein, dass die Schnittstelle ein Funkmodul umfasst, so dass die Steuereinrichtung bei einigen Ausführungsformen dazu ausgebildet sein kann, über eine Funkverbindung mit der Kontrolleinrichtung zu kommunizieren. Die Kontrolleinrichtung kann dazu insbesondere ebenfalls ein Funkmodul aufweisen. Darüber hinaus kann grundsätzlich auch ein Datenaustausch unmittelbar über die Stromversorgung vorgesehen sein, indem die Steuereinrichtung beispielsweise über eine Powerline mit der Kontrolleinrichtung verbindbar sein kann.

Beispielsweise kann eine solche zentrale Kontrolleinrichtung in einer Filiale eines Supermarkts mit mehreren Kühlmöbeln vorgesehen sein, um eine Fernwartung der Kühlmöbel zu ermöglichen und insofern ein Gateway für eine solche Fernwartung bilden. Die Standortinformation kann beispielsweise in einem von der Kontrolleinrichtung auslesbaren Speicher hinterlegt sein, wobei alternativ dazu jedoch auch vorgesehen sein kann, dass die Kontrolleinrichtung eine Information an die Inventarisierungsdatenbank übermittelt, welche eine Identifikation der Kontrolleinrichtung ermöglicht, wobei in der Datenbank eine Information darüber hinterlegt sein kann, an welchem Standort die betreffende Kontrolleinrichtung installiert ist. Auch hierdurch kann somit unmittelbar nachvollzogen werden, an welchem Standort sich der bewegliche Gegenstand befindet.

Alternativ zu einer Übermittlung des Identifizierungscodes und der Standortinformation durch die Kontrolleinrichtung an die Inventarisierungsdatenbank kann die Kontrolleinrichtung bei einigen Ausführungsformen auch dazu ausgebildet sein, die Standortinformation im Falle einer Verbindung zu der Steuereinrichtung an die Steuereinrichtung zu übermitteln, wobei die Steuereinrichtung dazu ausgebildet sein kann, den ausgelesenen Identifizierungscode und die empfangene Standortinformation an die Inventarisierungsdatenbank zu übermitteln. Bei solchen Ausführungsformen muss die Steuereinrichtung daher auch nicht zwangsläufig dazu eingerichtet sein, den Identifizierungscode an die Kontrolleinrichtung zu übermitteln.

Die Erfindung bezieht sich zudem auch auf ein System mit mehreren beweglichen Gegenständen, die an einem Standort angeordnet sind, insbesondere mit mehreren in einer Filiale angeordneten Kühlmöbeln, wobei zumindest einer der mehreren Gegenstände eine Identifikationseinrichtung, die einen dem Gegenstand zugeordneten Identifizierungscode für ein berührungsloses maschinelles Auslesen durch ein externes Lesegerät bereithält, und eine Steuereinrichtung aufweist. Ferner umfasst die Identifikationseinrichtung einen mit der Steuereinrichtung verbundenen Speicher, in welchem der Identifizierungscode gespeichert ist, und die Steuereinrichtung ist dazu eingerichtet, den Identifizierungscode aus dem Speicher auszulesen, wenn die Steuereinrichtung an eine Stromversorgung angeschlossen ist. Zudem ist die Steuereinrichtung mit einer Schnittstelle verbunden und dazu eingerichtet, mit einer zentralen Kontrolleinrichtung des Systems verbunden zu werden und den ausgelesenen Identifizierungscode über die Schnittstelle an die zentrale Kontrolleinrichtung zu übermitteln, wobei die zentrale Kontrolleinrichtung dazu ausgebildet ist, den empfangenen Identifizierungscode mit einer Standortinformation zu verknüpfen und den Identifizierungscode mit der Standortinformation an eine externe Inventarisierungsdatenbank zu übermitteln.

Alternativ oder zusätzlich zu einer Übermittlung des ausgelesenen Identifizierungscodes über die Schnittstelle an die zentrale Kontrolleinrichtung und einer Übermittlung des Identifizierungscodes und der Standortinformation an die Inventarisierungsdatenbank durch die Kontrolleinrichtung kann die Kontrolleinrichtung auch dazu ausgebildet sein, die Standortinformation im Falle einer Verbindung zu der Steuereinrichtung über die Schnittstelle an die Steuereinrichtung zu übermitteln, und die Steuereinrichtung kann dazu ausgebildet sein, den ausgelesenen Identifizierungscode und die empfangene Standortinformation an die Inventarisierungsdatenbank zu übermitteln.

Zudem können bei einigen Ausführungsformen mehrere oder sämtliche der Gegenstände des Systems gemäß einer Ausführungsform eines Gegenstands der hierin beschriebenen Art ausgebildet sein. Ferner können die Steuereinrichtung und/oder die Kontrolleinrichtung ein Merkmal oder mehrere Merkmale der hierin in Bezug auf einen beweglichen Gegenstand und/oder ein Verfahren zum Inventarisieren eines beweglichen Gegenstands erläuterten Steuereinrichtung und/oder Kontrolleinrichtung aufweisen. Insbesondere kann der zumindest eine Gegenstand dazu ausgebildet sein, über einen Datenbus mit der Kontrolleinrichtung verbunden zu werden und/oder die Schnittstelle kann insbesondere einen Anschluss für ein Buskabel bilden.

Der Speicher kann bei einigen Ausführungsformen des erläuterten Gegenstands von einem externen Lesegerät auslesbar sein. Bei anderen Ausführungsformen kann die Identifikationseinrichtung einen weiteren Speicher aufweisen, welcher von dem Lesegerät auslesbar ist. Insbesondere kann bei solchen Ausführungsformen der mit der Steuereinrichtung verbundene Speicher nicht von dem Lesegerät auslesbar sein.

Wie bereits erläutert, kann durch ein Auslesen des Identifizierungscodes durch das Lesegerät insbesondere eine Übermittlung der für die Inventarisierung erforderlichen Informationen an die Inventarisierungsdatenbank in Situationen erfolgen, in welchen der Gegenstand nicht an eine Stromversorgung angeschlossen werden soll. Dazu kann der von der Steuereinrichtung im Falle einer Stromversorgung auslesbare Speicher entweder von dem Lesegerät auslesbar sein oder es kann ein von dem Lesegerät auslesbarer gesonderter Speicher zur Verfügung gestellt werden. Insbesondere kann in dem von dem Lesegerät auslesbaren Speicher ein elektronischer Code für das berührungslose maschinelle Auslesen durch das Lesegerät, insbesondere über eine Funkverbindung, hinterlegt sein.

Bei einigen Ausführungsformen kann die Identifikationseinrichtung einen aktiven Transponder, insbesondere einen aktiven RFID-Tag, oder einen passiven Transponder, insbesondere einen NFC-Tag, aufweisen, wobei der Identifizierungscode von dem Transponder an das Lesegerät übermittelbar sein kann. Insbesondere kann der Transponder einen Speicher aufweisen, in welchem der Identifizierungscode hinterlegt ist. Wie bereits im Hinblick auf das Verfahren zum Inventarisieren von beweglichen Gegenständen erläutert, kann insbesondere vorgesehen sein, dass der aktive oder passive Transponder durch das Lesegerät aktivierbar ist. Im Falle einer Ausbildung der Identifikationseinrichtung mit einem aktiven Transponder kann der Gegenstand zudem eine Energiequelle zur Versorgung des aktiven Transponders mit elektrischer Energie aufweisen.

Der Speicher kann bei einigen Ausführungsformen Teil des Transponders sein. Bei solchen Ausführungsformen kann somit vorgesehen sein, dass der Speicher sowohl von dem Lesegerät, insbesondere über eine RFID-Verbindung und/oder eine NFC-Verbindung, auslesbar ist, wobei derselbe Speicher auch von der Steuereinrichtung auslesbar sein kann, wenn die Steuereinrichtung an eine Stromversorgung angeschlossen wird.

Zudem kann der Speicher bei einigen Ausführungsformen beschreibbar sein.

Die Erfindung wird im Folgenden rein beispielhaft anhand von Ausführungsbeispielen unter Bezugnahme auf die Zeichnungen erläutert.

Es zeigen:
- Fig. 1A bis 1E: eine jeweilige Veranschaulichung einer Ausführungsform eines als Kühlmöbel ausgebildeten beweglichen Gegenstands mit einer Identifikationseinrichtung, in welcher ein berührungslos maschinell durch ein externes Lesegerät auslesbarer Identifizierungscode hinterlegt ist,
- Fig. 2: eine Darstellung zur Veranschaulichung eines Verfahrens zum Inventarisieren des beweglichen Gegenstands bzw. Kühlmöbels, wenn der Gegenstand bzw. das Kühlmöbel nicht an eine Stromversorgung angeschlossen wird,
- Fig. 3: eine Veranschaulichung eines Verfahrens zum Inventarisieren des beweglichen Gegenstands bzw. des Kühlmöbels, wenn der bewegliche Gegenstand bzw. das Kühlmöbel an eine Stromversorgung angeschlossen wird, und
- Fig. 4A und 4B: eine jeweilige schematische Darstellung von in einer Inventarisierungsdatenbank gespeicherten Informationen zum Inventarisieren beweglicher Gegenstände.

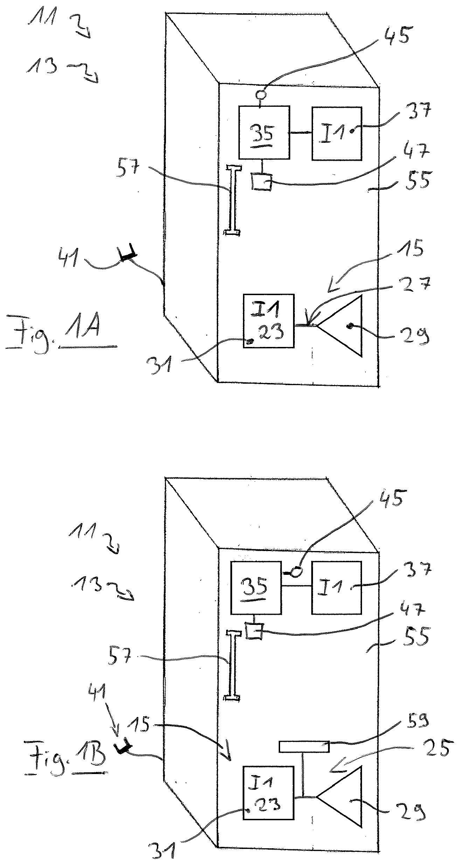

Die Fig. 1A bis 1E zeigen jeweilige Ausführungsformen eines beweglichen Gegenstands 11, welcher als ein steckerfertiges Kühlmöbel 13 ausgebildet ist. Derartige Kühlmöbel 13 können beispielsweise dazu vorgesehen sein, je nach Bedarf in Filialen eines Supermarkts eingesetzt zu werden, um für einen Verkauf anzubietende Waren zu kühlen. Die in den Fig. 1A bis 1E gezeigten Kühlmöbel 13 weisen dabei eine durch einen Griff 57 zu öffnende Tür 55 auf, um auf in dem Kühlmöbel 13 gekühlte Ware zugreifen zu können. Diese Ausbildung des Kühlmöbels 13 mit einer Tür 55 und einem Griff 57 ist jedoch rein beispielhaft und dem Fachmann sind davon abweichende Gestaltungen von Kühlmöbeln - etwa Kühltruhen mit einer Klappe mit oder ohne Griff, Kühlschränke mit Türen ohne Griff oder unverschlossene, zumindest einseitig offene und stets zugängliche Kühlmöbel, insbesondere für Supermärkte - hinlänglich bekannt.

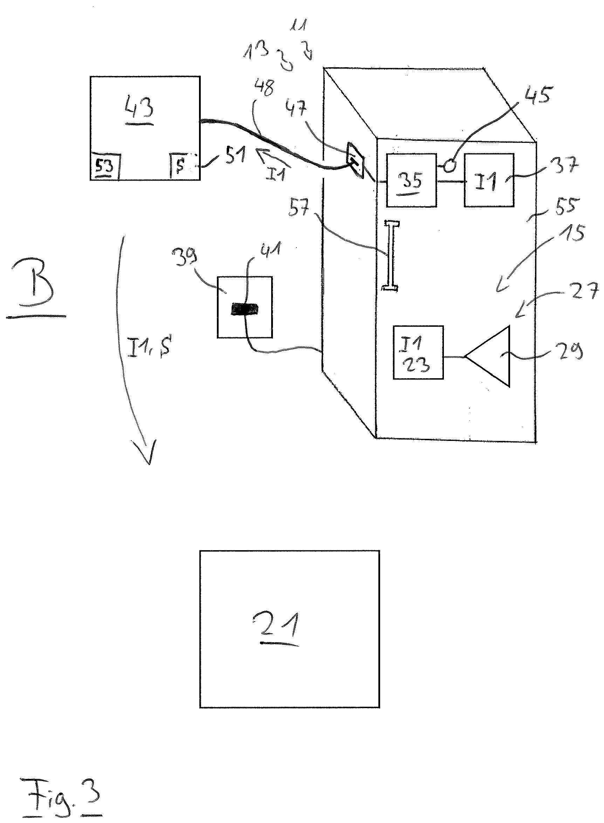

Ferner sind die in den Fig. 1A bis 1E veranschaulichten steckerfertigen Kühlmöbel 13 mit einem Stecker 41 ausgebildet, mittels dessen die Kühlmöbel 13 wahlweise mit einer Stromversorgung 39 verbunden werden können, um die zur Kühlung von Ware erforderliche elektrische Energie zu beziehen (vgl. auch Fig. 3). Durch Anschließen des Kühlmöbels 13 an die Stromversorgung 39 kann insbesondere auch eine Steuereinrichtung 35 des Kühlmöbels 13 mit der Stromversorgung 39 verbunden und mit elektrischer Energie versorgt werden, wobei die Steuereinrichtung 35 beispielsweise dazu ausgebildet sein kann, eine Regelung durchzuführen, um eine vorgegebene oder vorgebbare Soll-Temperatur in einem Innenraum des Kühlmöbels 13 einstellen und/oder halten zu können.

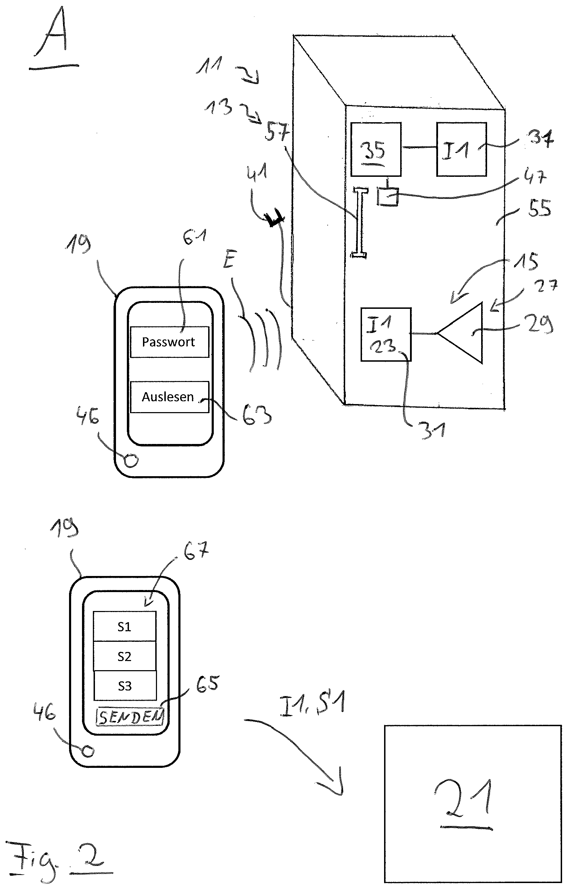

Da es sich bei derartigen steckerfertigen Kühlmöbeln 13 in der Regel um Investitionsgüter handelt, ist es aufgrund von gesetzlichen Vorgaben erforderlich, stets Auskunft über einen aktuellen Standort des Kühlmöbels 13 geben zu können, so dass dieser Standort dokumentiert werden muss. Jedoch können derartige Kühlmöbel 13 beispielsweise zwischen verschiedenen Filialen eines Supermarkts bewegt werden, um einen sich verändernden Bedarf an Kühlmöbeln 13 in den jeweiligen Filialen bedienen zu können. Zudem können erworbene Kühlmöbel 13 zeitweise in Lagern zwischengelagert werden, bevor die Kühlmöbel 13 zu einer Filiale transportiert werden, so dass sich der Standort eines jeweiligen Kühlmöbels 13 gegebenenfalls mehrmals ändern und das Erfordernis zur Dokumentation des aktuellen Standorts des Kühlmöbels 13 mit einem verhältnismäßig hohen Verwaltungsaufwand einhergehen kann. Um den Verwaltungsaufwand zur Dokumentation eines aktuellen Standorts des Kühlmöbels 13 bzw. eines sonstigen beweglichen Gegenstands 11 jedoch zu verringern und die Inventarisierung solcher beweglicher Gegenstände 11 zu vereinfachen, ist in der vorliegenden Offenbarung ein Verfahren zur Inventarisierung von beweglichen Gegenständen 11, insbesondere von Investitionsgütern und/oder Kühlmöbeln 13, beschrieben, welches nachstehend insbesondere unter Bezugnahme auf die Fig. 2 und 3 erläutert ist.

Um diese Inventarisierung zu ermöglichen, weisen die anhand der Fig. 1A bis 1E veranschaulichten Kühlmöbel 13 eine jeweilige Identifikationseinrichtung 15 auf, die einen dem Kühlmöbel 13 bzw. dem beweglichen Gegenstand 11 zugeordneten Identifizierungscode 11 für ein berührungsloses maschinelles Auslesen durch ein externes Lesegerät 19, insbesondere ein Smartphone, bereithält (vgl. auch Fig. 2 und 3). Dies ermöglicht es, den Identifizierungscode 11 berührungslos maschinell durch das Lesegerät 19 auszulesen und dem Identifizierungscode 11 eine Standortinformation S1 zuzuordnen, die einen Standort des Gegenstands 11 kennzeichnet, um das Datenpaar aus dem Identifizierungscode 11 und der Standortinformation S1 an eine externe Inventarisierungsdatenbank 21 zu übermitteln, so dass der aktuelle Standort des Gegenstands 11 durch eine entsprechende Anfrage an der Inventarisierungsdatenbank 21 ermittelt werden kann. Dies wird nachstehend insbesondere unter Bezugnahme auf Fig. 2 noch näher erläutert.

Bei der in Fig. 1A veranschaulichten Ausführungsform ist der Identifizierungscode 11 durch einen über eine Funkverbindung auslesbaren elektronischen Code 23 gebildet, der in einem Speicher 31 eines passiven Transponders 27 gespeichert ist. Der passive Transponder 27 umfasst zudem eine Sende- und Empfangseinrichtung 29, durch welche eine Anfrage des Identifizierungscodes I1 über die Funkverbindung empfangbar und der Identifizierungscode I1 an das Lesegerät 19 übermittelbar ist. Insbesondere kann die Sende- und Empfangseinrichtung 29 des passiven Transponders 27 dazu ausgebildet sein, den Identifizierungscode I1 über eine NFC (Near Field Communication)-Verbindung zu übermitteln und der passive Transponder 27 kann insbesondere als ein NFC-Tag ausgebildet sein.

Bei der anhand von Fig. 1B veranschaulichten Ausführungsform umfasst die Identifikationseinrichtung 15 anstelle des passiven Transponders 27 einen aktiven Transponder 25, bei welchem es sich insbesondere um einen aktiven RFID (Radio Frequency Identification)-Tag handeln kann. Der aktive Transponder 25 umfasst im Unterschied zu dem passiven Transponder 27 eine Energiequelle 59, über welche der Speicher 31 sowie die Sende- und Empfangseinrichtung 29 mit elektrischer Energie versorgt werden können. Insbesondere kann es eine solche eigene Energiequelle 59 ermöglichen, den Identifizierungscode I1 über im Vergleich zu dem passiven Transponder 27 größere Reichweiten an das Lesegerät 19 zu übermitteln. Um jedoch einen unnötigen Energieverbrauch, etwa durch dauerhaftes Senden des Identifizierungscodes I1, zu vermeiden, kann vorgesehen sein, dass der Speicher 31 und/oder die Sende- und Empfangseinrichtung 29 lediglich dann mit der elektrischen Energiequelle 59 verbunden werden oder eine Energieübertragung von der elektrischen Energiequelle 59 zu dem Speicher 31 und/oder der Sende- und Empfangseinrichtung 29 lediglich dann aktiviert wird, wenn ein Aktivierungssignal oder eine Anfrage des Identifizierungscodes I1 von dem Lesegerät 19 empfangen wird.

Der passive Transponder 27 ermöglicht hingegen ein Übertragen des Identifizierungscodes I1, ohne dass eine gesonderte Energiequelle erforderlich ist, indem zum Übertragen des Identifizierungscodes I1 unmittelbar die durch elektromagnetische Strahlung E von dem Lesegerät 19 übermittelte elektrische Energie genutzt werden kann (vgl. auch Fig. 2). Eine Übertragung des Identifizierungscodes I1 ist jedoch durch den passiven Transponder 27 über im Vergleich zu dem aktiven Transponder 25 weniger große Reichweiten möglich.

Ferner ist bei den anhand von Fig. 1A und 1B veranschaulichten Kühlmöbeln 13 die jeweilige Steuereinrichtung 35 mit einem jeweiligen Speicher 37 verbunden, in welchem der Identifizierungscode I1 ebenfalls gespeichert ist. Zudem ist die Steuereinrichtung 35 mit einer Schnittstelle 47 verbunden, über welche der Identifizierungscode I1 an die Inventarisierungsdatenbank 21 übermittelbar ist, wenn das Kühlmöbel 13 an die Stromversorgung 39 angeschlossen ist und eine Datenverbindung zu der Inventarisierungsdatenbank 21 besteht. Ferner ist eine Standortbestimmungseinrichtung 45, beispielsweise ein GPS-Sensor, an dem Kühlmöbel 13 vorgesehen, so dass die Steuereinrichtung 35 auch dazu ausgebildet sein kann, über die Schnittstelle 47 eine von der Standortbestimmungseinrichtung 45 empfangene Standortinformation S1 an die Inventarisierungsdatenbank 21 zu übermitteln, so dass das erwähnte Datenpaar aus dem Identifizierungscode I1 und der Standortinformation S1 unmittelbar von der Steuereinrichtung 35 an die Inventarisierungsdatenbank 21 übermittelt werden kann, ohne dass gesonderte Schritte zum Auslesen des Identifizierungscode I1 erforderlich sind. Dies wird nachstehend insbesondere unter Bezugnahme auf Fig. 3 noch näher erläutert.

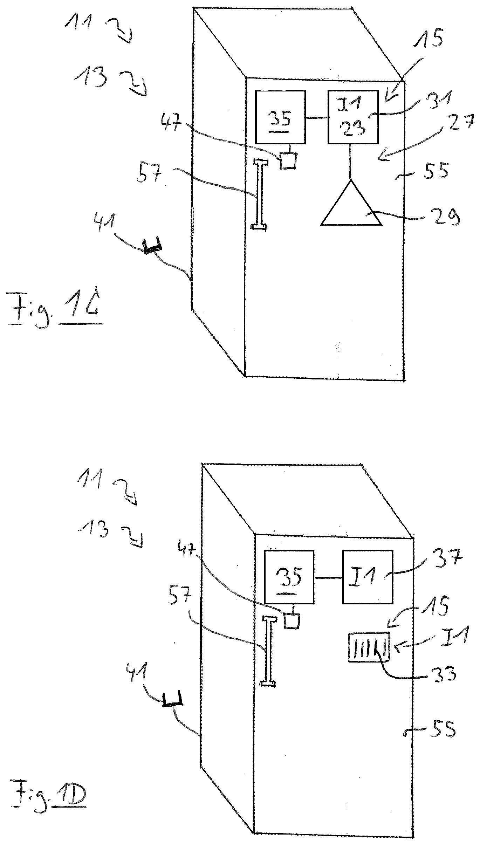

Während somit bei den Ausführungsformen der Fig. 1A und 1B ein gesonderter Speicher 37 vorgesehen ist, welcher von der Steuereinrichtung 35 ausgelesen werden kann, ist bei der Ausführungsform des Kühlmöbels 13 gemäß Fig. 1C vorgesehen, dass die Steuereinrichtung 35 dazu ausgebildet ist, einen Speicher 31 eines passiven Transponders 27 auszulesen, welcher auch von dem Lesegerät 19 auslesbar ist (vgl. auch Fig. 2 und 3). Bei dieser Ausführungsform kann der Speicher 31 insofern von der Steuereinrichtung 35 auslesbar sein, wenn das Kühlmöbel 13 mit einer Stromversorgung 39 verbunden ist, wobei derselbe Speicher 31 zudem über eine Funkverbindung zu der Sende- und Empfangseinrichtung 29 des passiven Transponders 27 von dem externen Lesegerät 19 auslesbar ist.

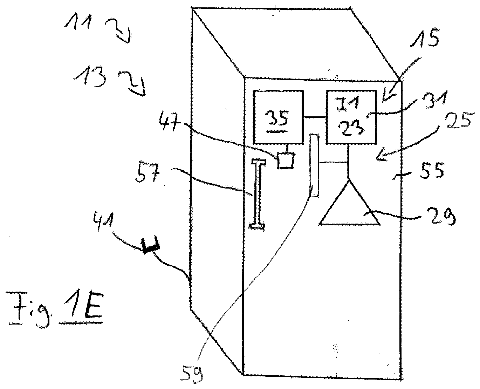

Analog dazu ist bei der in Fig. 1E veranschaulichten Ausführungsform vorgesehen, dass die Steuereinrichtung 35 dazu ausgebildet ist, einen Speicher 31 eines aktiven Transponders 25, insbesondere eines aktiven RFID-Tags, auszulesen, welcher auch von dem Lesegerät 19 auslesbar ist.

Ferner zeigt Fig. 1D eine Ausführungsform des Kühlmöbels 13, bei welcher die Identifikationseinrichtung 15 den Identifizierungscode I1 als optisch auslesbaren optischen Code 33, beispielhaft einen Strichcode oder QR-Code, für das berührungslose maschinelle Auslesen durch das externe Lesegerät 19 bereithält. Ein solcher optischer Code 33 kann somit von dem Lesegerät 19, insbesondere von einer Kamera eines Smartphones, abgescannt und das Kühlmöbel 13 dadurch identifiziert werden.

Fig. 2 veranschaulicht ein Verfahren zum Inventarisieren eines Kühlmöbels 13 bei einem Eintreffen in einem Lager A, in welchem das Kühlmöbel 13 gelagert, jedoch nicht zur Kühlung von Ware genutzt werden soll. Insofern soll das Kühlmöbel 13 in dem Lager A insbesondere nicht an eine Stromversorgung 39 angeschlossen werden. Beispielhaft ist eine der Fig. 1A entsprechende Ausführungsform des Kühlmöbels 13 gezeigt, wobei das Verfahren jedoch entsprechend für Kühlmöbel 13 gemäß den Ausführungsformen der Fig. 1B bis 1E durchgeführt werden kann.

Beim Eintreffen des Kühlmöbels 13 in dem Lager A kann zunächst mittels des Lesegeräts 19, welches beispielhaft als ein Smartphone ausgebildet ist, durch Auswählen eines Auslesebefehls 63 der Identifizierungscode I1 aus der Identifikationseinrichtung 15 ausgelesen werden. Um den Identifizierungscode I1 aus dem Speicher 31 des passiven Transponders 27 auslesen zu können, kann insbesondere von dem Lesegerät 19 übermittelte elektromagnetische Strahlung E dazu genutzt werden, die Sende- und Empfangseinrichtung 29 mit elektrischer Energie zu versorgen und ein Aussenden des Identifizierungscodes I1 über eine Funkverbindung an das Lesegerät 19, insbesondere über eine NFC-Verbindung, zu ermöglichen. Zudem kann zum Auslesen des Speichers 31 des passiven Transponders 27 jedoch eine Legitimations- und/oder Identitätsprüfung 61 an dem Lesegerät 19 erforderlich sein, wozu beispielsweise ein an dem Lesegerät 19 eingegebenes Passwort mit der Anfrage des Identifizierungscode I1 an den Transponder 25 übermittelt und mit einem in dem Speicher 31 hinterlegten Passwort verglichen werden kann

Nachdem der Identifizierungscode I1 ausgelesen wurde, kann dem Kühlmöbel 13 bzw. dem beweglichen Gegenstand 11 ferner eine Standortinformation S1 zugeordnet werden. Beispielsweise kann die Standortinformation S1 aus einer Auswahl 67 verschiedener Standortinformationen S1, S2 und S3 an dem Lesegerät 19 ausgewählt werden, indem beispielsweise verschiedene Lager oder Filialen aus einem Dropdown-Menü angewählt werden können. Alternativ dazu kann es beispielsweise vorgesehen sein, dass ein Benutzer des Lesegeräts 19 die Standortinformation S1 an dem Lesegerät 19 eingibt. Ferner kann das Lesegerät 19 grundsätzlich auch dazu ausgebildet sein, die Standortinformation S1 automatisch zu erzeugen, wozu das Lesegerät 19 insbesondere auf eine Standortbestimmungseinrichtung 46, beispielsweise einen GPS-Sensor, zurückgreifen kann, um den Standort des Lesegeräts 19 und darüber auch den Standort des Kühlmöbels 13 zu ermitteln.

Das Datenpaar aus dem ausgelesenen Identifizierungscode I1 und der Standortinformation S1 kann daraufhin durch Auswählen eines entsprechenden Übermittlungsbefehls 65 an dem Lesegerät 19 an die Inventarisierungsdatenbank 21 übermittelt werden. Insbesondere kann dieses Übermitteln über eine Funkverbindung, beispielsweise eine WLAN/WiFi-Verbindung oder eine Mobilfunkverbindung, erfolgen. Die Standortinformation S1 kann insbesondere das Lager A bezeichnen und/oder Koordinaten, insbesondere GPS-Koordinaten, umfassen, wobei in der Inventarisierungsdatenbank 21 beispielsweise eine Zuordnung zwischen solchen Koordinaten und dem Lager A erfolgen kann.

Indem die Identifikationseinrichtung 15 somit durch das Lesegerät 19 ausgelesen und das Datenpaar aus dem Identifizierungscode I1 und der Standortinformation S1 von dem Lesegerät an die Inventarisierungsdatenbank 21 übermittelt werden kann, kann die Inventarisierung des Gegenstands 11 und die Dokumentation dessen aktuellen Standorts erfolgen, ohne dass das Kühlmöbel 13 in dem Lager A an die Stromversorgung 39 angeschlossen oder eine Identifikation des Gegenstands 11 händisch eingegeben werden muss. Alternativ zu dem als Smartphone ausgebildeten Lesegerät 19 kann beispielsweise auch vorgesehen sein, ein zum Auslesen der Identifikationseinrichtung 15 ausgebildetes sonstiges Lesegerät zu nutzen, welches beispielsweise mit einem stationären Rechner verbunden sein kann, über welchen das Datenpaar aus dem Identifizierungscode I1 und der Standortinformation S1 an die Inventarisierungsdatenbank 21 übermittelt werden kann. Ferner ist grundsätzlich möglich, ein Lesegerät 19 etwa an einem Eingang eines Lagers oder sonstigen Standorts anzuordnen, so dass die Identifikationseinrichtung 15 unmittelbar bei einem Führen des Gegenstands 11 durch den Eingang ausgelesen und gemeinsam mit einer Standortinformation S1, die beispielsweise in einem Speicher des stationären Lesegeräts 19 hinterlegt sein kann, an die Inventarisierungsdatenbank 21 übermittelt werden kann. Dies kann insbesondere bei einer Inventarisierung von Gegenständen 11 vorgesehen sein, die eine Identifikationseinrichtung 15 mit einem aktiven Transponder 25 aufweisen, um ein Auslesen der Identifikationseinrichtung 15 über ausreichend große Reichweiten zu ermöglichen.

Fig. 3 veranschaulicht eine alternative Möglichkeit zum Inventarisieren des Gegenstands 11 in einem Fall, in welchem das Kühlmöbel 13 an einer Filiale B eines Supermarkts aufgestellt wird und zum Kühlen von Waren verwendet werden soll. Um das Kühlen der Ware zu ermöglichen, wird das Kühlmöbel 13 an die Stromversorgung 39 angeschlossen, so dass auch die Steuereinrichtung 35 mit elektrischer Energie versorgt wird. Infolgedessen kann die Steuereinrichtung 35 den Identifizierungscode I1 aus dem Speicher 37 auslesen.

Ferner wird ein Buskabel 48 nach dem Eintreffen des Kühlmöbels 13 in der Filiale B an einer Schnittstelle 47 angeschlossen und die Steuereinrichtung 35 dadurch mit einer zentralen Kontrolleinrichtung 43 verbunden, wobei die Kontrolleinrichtung 43 beispielsweise dazu vorgesehen sein kann, eine Fernwartung und einen Zugriff auf sämtliche in der Filiale B angeordneten Kühlmöbel 13 oder eine zentrale Ansteuerung sämtlicher in der Filiale B angeordneter Kühlmöbel 13 zu ermöglichen. Insofern kann das Kühlmöbel 13 durch dieses Anschließen des Buskabels 48 insbesondere in ein System mehrerer über die Kontrolleinrichtung 43 steuerbarer und/oder erreichbarer Kühlmöbel 13 aufgenommen werden.

Alternativ zu einer Verbindung über das Buskabel 48 ist beispielsweise auch möglich, die Schnittstelle 47 als ein Funkmodul auszubilden, so dass infolge des Anschließens des Kühlmöbels 13 an die Stromversorgung 39 etwa eine Funkverbindung zwischen der Schnittstelle 47 und der Kontrolleinrichtung 43 hergestellt werden könnte. Darüber hinaus kann grundsätzlich auch ein Datenaustausch unmittelbar über die Stromversorgung 39 vorgesehen sein, indem die Steuereinrichtung 35 beispielsweise über eine Powerline mit der Kontrolleinrichtung 43 verbindbar sein kann.

Die Steuereinrichtung 35 ist dazu ausgebildet, den aus dem Speicher 37 ausgelesenen Identifizierungscode I1 über die Schnittstelle 47 an die Kontrolleinrichtung 43 zu übermitteln, so dass der Kontrolleinrichtung 43 zunächst eine Information darüber bereitgestellt werden kann, dass das Kühlmöbel 13 in der Filiale B angeschlossen und in das System aufgenommen wurde. Der Kontrolleinrichtung 43 kann ferner eine Standortinformation S2 zugeordnet sein, welche in einem von der Kontrolleinrichtung 43 auslesbaren Speicher 51 gespeichert sein kann. Insbesondere kann die Standortinformation S2 die Filiale B bezeichnen, deren Kühlmöbel 13 über die Kontrolleinrichtung 43 kontrollierbar und/oder zugänglich sind.

Die Kontrolleinrichtung 43 weist bei der in Fig. 3 gezeigten Ausführungsform ferner eine Funkeinrichtung 53 auf oder ist mit einer solchen Funkeinrichtung 53 verbunden, wobei die Kontrolleinrichtung 43 dazu ausgebildet ist, das Datenpaar aus dem Identifizierungscode I1 und der der Kontrolleinrichtung 43 zugeordneten Standortinformation S2 über eine Funkverbindung an die Inventarisierungsdatenbank 21 zu übermitteln. Alternativ zu einer solchen Funkverbindung kann jedoch beispielsweise auch vorgesehen sein, dass die Kontrolleinrichtung 43 über eine Kabelverbindung mit dem Internet verbunden ist, um das Datenpaar aus dem Identifizierungscode I1 und der Standortinformation S2 über eine derartige Internetverbindung an die Inventarisierungsdatenbank 21 übermitteln zu können. Unabhängig von der konkreten Form der Verbindung zwischen der Kontrolleinrichtung 43 und der Inventarisierungsdatenbank 21 kann jedoch auf einfache Weise eine Verbindung zwischen der Steuereinrichtung 35 und der Kontrolleinrichtung 43 und dadurch unmittelbar auch eine Datenverbindung von der Steuereinrichtung 35 zu der Inventarisierungsdatenbank 21 hergestellt werden, die ein einfaches und automatisches Inventarisieren des Kühlmöbels 13 ermöglicht, ohne das gesonderte Schritte zum Inventarisieren des Kühlmöbels 13 als die ohnehin erforderlichen Schritte des Anschließens des Kühlmöbels 13 an die Stromversorgung 39 und des Aufnehmens des Kühlmöbels 13 in das durch die Kontrolleinrichtung 43 zugängliche System über das Buskabel 48 durchgeführt werden müssen.

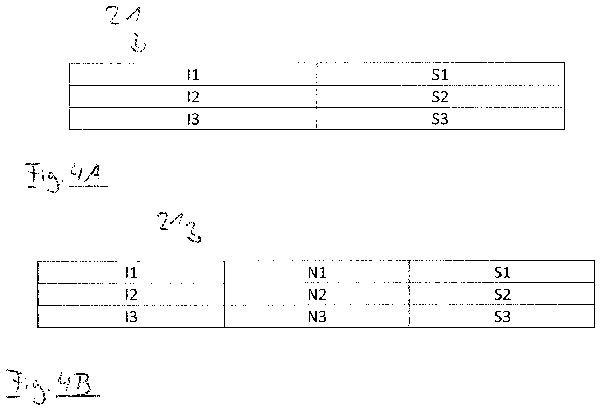

Fig. 4A zeigt beispielhaft eine Struktur der Inventarisierungsdatenbank 21, bei welcher jeweiligen Identifizierungscodes I1, I2 und I3 jeweilige Standortinformationen S1, S2 und S3 zugeordnet sind. Diese Zuordnung kann es somit ermöglichen, durch Anfragen des jeweiligen Identifizierungscodes I1, I2 oder I3 den entsprechenden Standort des durch den Identifizierungscode I1, I2 oder I3 gekennzeichneten Gegenstands 11 anzufragen. Beispielhaft sind den Identifizierungscodes I1, I2 und I3 hier verschiedene Standortinformationen S1, S2 und S3 zugeordnet, wobei jedoch grundsätzlich auch mehreren Identifizierungscodes I1, I2 oder I3 dieselbe Standortinformation S1, S2 oder S3 zugeordnet sein könnte, wenn sich etwa mehrere Kühlmöbel 13 in demselben Lager A oder derselben Filiale B befinden.

Fig. 4B zeigt ferner, dass den Identifizierungscodes I1, I2 und I3 bei einigen Ausführungsformen eine jeweilige weitere Kennzeichnung N1, N2 und N3 des Gegenstands 11 in der Inventarisierungsdatenbank 21 zugeordnet sein kann. Beispielsweise kann es vorgesehen sein, dass die Identifizierungscodes I1, I2 und I3 von einem Käufer des Kühlmöbels 13 festgelegte Ziffern- und/oder Buchstabenfolgen zur Kennzeichnung der Kühlmöbel 13 in einem System des Käufers umfassen, wohingegen die jeweiligen Kühlmöbel 13 auch durch die weiteren Kennzeichnungen N1, N2 und N3 von einem Hersteller der Kühlmöbel 13 in einem von dem Hersteller genutzten Kennzeichnungssystem gekennzeichnet sein können. Die Zuordnung zwischen den Identifizierungscodes I1, I2 und I3 und den weiteren Kennzeichnungen N1, N2 und N3 ermöglicht somit ein Mapping zwischen den Systemen des Käufers bzw. Kunden und des Herstellers der Kühlmöbel 13, so dass durch Anfragen in beiden Systemen der Verbleib eines jeweiligen Kühlmöbels 13 ermittelt werden kann.

Ferner kann bei einigen Ausführungsformen vorgesehen sein, dass auch ein Zeitpunkt des Auslesens des Identifizierungscodes I1 oder des Übermittelns des Identifizierungscodes I1 an die Inventarisierungsdatenbank 21 und/oder des Empfangens des Identifizierungscodes I1 in der Inventarisierungsdatenbank 21 gespeichert wird.

### Bezugszeichenliste

- 11: beweglicher Gegenstand
- 13: Kühlmöbel
- 15: Identifikationseinrichtung
- 19: Lesegerät
- 21: Inventarisierungsdatenbank
- 23: elektronischer Code
- 25: aktiver Transponder
- 27: passiver Transponder
- 29: Sende-/Empfangseinrichtung
- 31: Speicher
- 33: optischer Code
- 35: Steuereinrichtung
- 37: Speicher
- 39: Stromversorgung
- 41: Stecker
- 43: Kontrolleinrichtung
- 45: Standortbestimmungseinrichtung
- 46: Standortbestimmungseinrichtung
- 47: Schnittstelle
- 48: Buskabel
- 49: Speicher
- 51: Speicher
- 53: Funkeinrichtung
- 55: Tür
- 57: Griff
- 59: Energiequelle
- 61: Legitimationsprüfung
- 63: Auslesebefehl
- 65: Übermittlungsbefehl
- 67: Auswahl
- A: Lager
- B: Filiale
- E: elektromagnetische Strahlung
- I1, 12, I3: Identifizierungscode
- N1, N2, N3: weitere Kennzeichnung
- S1, S2, S3: Standortinformation

## Patentansprüche

1. Verfahren zum Inventarisieren eines beweglichen Gegenstands (11), insbesondere eines beweglichen Investitionsguts und/oder Kühlmöbels (13), welcher eine Identifikationseinrichtung (15) aufweist, die einen dem Gegenstand (11) zugeordneten Identifizierungscode (I1, I2, I3) für ein berührungsloses maschinelles Auslesen durch ein externes Lesegerät (19) bereithält,
bei welchem:
- der Identifizierungscode (I1, I2, I3) durch das Lesegerät (19), insbesondere ein Smartphone, berührungslos maschinell ausgelesen wird;
- dem ausgelesenen Identifizierungscode (I1, I2, I3) eine Standortinformation (S1, S2, S3) zugeordnet wird, welche einen Standort des Gegenstands (11) bezeichnet; und
- der ausgelesene Identifizierungscode (I1, I2, I3) und die zugeordnete Standortinformation (S1, S2, S3), insbesondere drahtlos, an eine Inventarisierungsdatenbank (21) übermittelt werden.

2. Verfahren nach Anspruch 1,
wobei der bewegliche Gegenstand (11) ein Kühlmöbel (13) ist.

3. Verfahren nach Anspruch 1 oder 2,
wobei die Standortinformation (S1, S2, S3) dem Identifizierungscode (I1, I2, I3) an dem Lesegerät (19) zugeordnet wird; und/oder
wobei der Identifizierungscode (I1, I2, I3) und die Standortinformation (S1, S2, S3) von dem Lesegerät (19) an die Inventarisierungsdatenbank (21) übermittelt werden; und/oder
wobei die Standortinformation (S1, S2, S3) automatisch von dem Lesegerät (19) ermittelt wird, oder wobei die Standortinformation (S1, S2, S3) durch eine Benutzereingabe ausgewählt oder erzeugt wird.

4. Verfahren nach einem der vorhergehenden Ansprüche,
wobei der Identifizierungscode (I1, I2, I3) einen drahtlos auslesbaren elektronischen Code (23) umfasst, wobei der elektronische Code (23) von dem Lesegerät (19) über eine Funkverbindung ausgelesen wird,
wobei der elektronische Code (23) von dem Lesegerät (19) insbesondere über eine RFID-Verbindung, insbesondere eine NFC-Verbindung, ausgelesen wird.

5. Verfahren nach einem der vorhergehenden Ansprüche,
wobei die Identifikationseinrichtung (15) einen aktiven Transponder (25), insbesondere einen aktiven RFID-Tag, oder einen passiven Transponder (27), insbesondere einen NFC-Tag, mit einem Speicher (31) aufweist, in welchem der Identifizierungscode (I1, I2, I3) gespeichert ist, wobei der Identifizierungscode (I1, I2, I3) von dem Transponder (25, 27) an das Lesegerät (19) übermittelt wird,
wobei der Transponder (25, 27) insbesondere durch von dem Lesegerät (19) übermittelte elektromagnetische Strahlung (E) aktiviert wird.

6. Verfahren Anspruch 5,
wobei der Speicher (31) beschreibbar ist, wobei der Identifizierungscode (I1, I2, I3) in den Speicher (31) eingeschrieben wird,
wobei vor dem Beschreiben des Speichers (31) insbesondere eine Legitimations- und/oder Identitätsprüfung (61) durchgeführt wird.

7. Verfahren nach einem der vorhergehenden Ansprüche,
wobei der Identifizierungscode (I1, I2, I3) an der Inventarisierungsdatenbank (21) einer weiteren Kennzeichnung (N1, N2, N3) zugeordnet wird.

8. Verfahren nach einem der vorhergehenden Ansprüche,
wobei der Gegenstand (11) eine Steuereinrichtung (35) aufweist, wobei der Identifizierungscode (I1, I2, I3) bei einem Anschließen der Steuereinrichtung (35) an eine Stromversorgung (39) von der Steuereinrichtung (35) ausgelesen wird und wobei der Identifizierungscode (I1, I2, I3) im Falle einer Datenverbindung von der Steuereinrichtung (35) zu der Inventarisierungsdatenbank (21) von der Steuereinrichtung (35) an die Inventarisierungsdatenbank (21) übermittelt wird.

9. Verfahren nach Anspruch 8,
wobei die Standortinformation (S1, S2, S3) von der Steuereinrichtung (35) des Gegenstands (11) gemeinsam mit dem Identifizierungscode (I1, I2, I3) an die Inventarisierungsdatenbank (21) übermittelt wird; oder
wobei der Identifizierungscode (I1, I2, I3) von der Steuereinrichtung (35) des Gegenstands (11) an eine zentrale Kontrolleinrichtung (43) an einem Standort des Gegenstands (11), insbesondere einer Filiale (B), übermittelt wird, mit welcher die Steuereinrichtung (35) nach einem Eintreffen des Gegenstands (11) an dem Standort verknüpft wird, wobei die Standortinformation (S1, S2, S3) der zentralen Kontrolleinrichtung (43) zugeordnet ist und wobei die zentrale Kontrolleinrichtung (43) den Identifizierungscode (I1, I2, I3) gemeinsam mit der Standortinformation (S1, S2, S3) an die Inventarisierungsdatenbank (21) übermittelt.

10. Verfahren nach Anspruch 8 oder 9,
wobei die Steuereinrichtung (35) den Identifizierungscode (I1, I2, I3) aus einem Speicher (31) ausliest, welcher auch von dem Lesegerät (19) auslesbar ist, oder wobei die Steuereinrichtung (35) den Identifizierungscode (I1, I2, I3) aus einem von dem Lesegerät (19) nicht auslesbaren Speicher (37) ausliest.

11. Beweglicher Gegenstand (11), insbesondere bewegliches Investitionsgut oder Kühlmöbel (13),
welcher eine Identifikationseinrichtung (15), die einen dem Gegenstand (11) zugeordneten Identifizierungscode (I1, I2, I3) für ein berührungsloses maschinelles Auslesen durch ein externes Lesegerät (19), insbesondere ein Smartphone, bereithält, und eine Steuereinrichtung (35) aufweist,
wobei die Identifikationseinrichtung (15) eine mit der Steuereinrichtung (35) verbundenen Speicher (31, 37) aufweist, in welchem der Identifizierungscode (I1, I2, I3) gespeichert ist,
wobei die Steuereinrichtung (35) dazu eingerichtet ist, den Identifizierungscode (I1, I2, I3) aus dem Speicher (31, 37) auszulesen, wenn die Steuereinrichtung (35) an eine Stromversorgung (39) angeschlossen ist, und wobei die Steuereinrichtung (35) ferner mit einer Schnittstelle (47) verbunden ist, wobei die Steuereinrichtung (35) dazu eingerichtet ist, den ausgelesenen Identifizierungscode (I1, I2, I3) über die Schnittstelle (47) an eine bezüglich des Investitionsguts externe Inventarisierungsdatenbank (21) zu übermitteln.

12. Beweglicher Gegenstand (11) nach Anspruch 11,
wobei der Gegenstand (11) eine Standortbestimmungseinrichtung (45) aufweist, wobei die Steuereinrichtung (35) dazu ausgebildet ist, eine von der Standortbestimmungseinrichtung (45) empfangene Standortinformation (S1, S2, S3) über einen Standort des Gegenstands (11) an die Inventarisierungsdatenbank (21) zu übermitteln.

13. Beweglicher Gegenstand (11) nach Anspruch 11 oder 12,
wobei die Schnittstelle (47) mit einer zentralen Kontrolleinrichtung (43) verbindbar ist, wobei die Steuereinrichtung (35) dazu eingerichtet ist, den Identifizierungscode (I1, I2, I3) nach dem Verbinden mit der Kontrolleinrichtung (43) an die Kontrolleinrichtung (43) zu übermitteln,
wobei die Kontrolleinrichtung (43) dazu ausgebildet ist, den Identifizierungscode (I1, I2, I3) gemeinsam mit einer der Kontrolleinrichtung (43) zugeordneten Standortinformation (S1, S2, S3) an die Inventarisierungsdatenbank (21) zu übermitteln.

14. Beweglicher Gegenstand (11) nach einem der Ansprüche 11 bis 13,
wobei der Speicher (31) von dem Lesegerät (19), insbesondere einem Smartphone, auslesbar ist, oder wobei die Identifikationseinrichtung (15) einen weiteren Speicher (31) aufweist, in welchem der Identifizierungscode (I1, I2, I3) gespeichert ist und welcher von dem Lesegerät (19) auslesbar ist.

15. Beweglicher Gegenstand (11) nach einem der Ansprüche 11 bis 14,
wobei die Identifikationseinrichtung (15) einen aktiven Transponder (25), insbesondere einen aktiven RFID-Tag, oder einen passiven Transponder (27), insbesondere einen NFC-Tag, aufweisen, wobei der Identifizierungscode (I1, I2, I3) von dem Transponder (25, 27) an das Lesegerät (19) übermittelbar ist,
wobei der Speicher (31) insbesondere Teil des Transponders (25, 27) ist.
